# EUROPÄISCHE PATENTSCHRIFT

(11) **EP 2 144 362 B1**
(45) Veröffentlichungstag und Bekanntmachung des Hinweises auf die Patenterteilung: **16.03.2011**
(21) Anmeldenummer: 08159823.7
(22) Anmeldetag: 07.07.2008
(51) Int. Cl.: H02P 21/00

(54) **Verfahren und Anordnung zur Beobachtung der Antriebsgeschwindigkeit eines Permanentmagnet-Läufers in einem Antriebsregelkreis**
Method and assembly for observing the drive speed of a permanent magnet rotor in a drive control loop
Procédé et agencement pour l'observation de la vitesse d'entraînement d'un rotor à aimant permanent dans un circuit d'entraînement

(43) Veröffentlichungstag der Anmeldung: 13.01.2010
(73) Patentinhaber: Baumüller Nürnberg GmbH, 90482 Nürnberg (DE)
(72) Erfinder: Götz, Dr., Fritz Rainer, 90522, Oberasbach (DE); Barinberg, Dr., Viktor, 90491, Nürnberg (DE); Jäger, Franz, 90419, Nürnberg (DE)
(74) Vertreter: Götz, Georg Alois

(56) Entgegenhaltungen:
- US-A1- 2006 125 439
- US-A1- 2007 040 528
- BAHR, A; MUTSCHLER, P.: "Speed acquisition methods for high-bandwidth servo drives" IAS 2005, CONFERENCE RECORD, Bd. 1, Februar 2005 (2005-02), - Juni 2005 (2005-06) Seiten 737-744, XP002497986

## Beschreibung

Die Erfindung betrifft ein Verfahren zur Beobachtung, Ermittlung und/oder Aufbereitung der Antriebsgeschwindigkeit eines Permanentmagnet-Läufers einer elektrischen bürstenlosen Linear- oder Rotationsmaschine. Dieses Verfahren ist insbesondere für einen Antriebsregelkreis geeignet. Bei dem Verfahren werden erste, eine Läufer-Geschwindigkeit darstellende Eingangswerte verwendet, welche mit zweiten, eine Läuferbeschleunigung darstellenden Eingangswerten zu einem resultierenden Geschwindigkeits-Ausgangswert verarbeitet werden. Ferner betrifft die Erfindung eine entsprechende Anordnung zur Durchführung dieses Verfahrens, wobei die Anordnung einen Geschwindigkeitsbeobachter mit einem ersten Eingang für Geschwindigkeitswerte und einem zweiten Eingang für Beschleunigungswerte aufweist. Dem zweiten bzw. Beschleunigungswerte-Eingang ist ein Ferraris-Beschleunigungssensor oder sonstiger Beschleunigungssensor zugeordnet.

Gemäß F. Götz und B. Liu "Verbesserte Prozessqualität durch Bewegungssensoren in Antriebssystemen von komplexen Maschinen" (Tagungsband SPS/IPC/Drives 2000, Fachmesse und Kongress am 28.-30.11.2000 in Nürnberg) stellt die Beschleunigung einer zu bewegenden Masse die direkte, unmittelbare und unverzögerte Reaktion auf die einwirkenden Kräfte dar. Die Geschwindigkeit ist schon eine verzögerte Information darüber. Die Lage ist noch mehr verzögert, und die Berechnung der Geschwindigkeit aus der Lage ist tatsächlich nur verzögert möglich. Deshalb wird in dem genannten Beitrag zur Fachtagung SPS/IPC/Drives 2000 die Verwendung von Ferraris-Beschleunigungssensoren für synchronisierte Einzelantriebe in Direktantriebstechnik vorgeschlagen. Diese Sensoren liefern die direkte Information über das Bewegungsverhalten und sind so hervorragend geeignet, ein Rückkopplungssignal vor allem zur Systemdämpfung bereitzustellen.

In J. Faßnacht und P. Mutschler "An observer to improve the speed signal using a Ferraris acceleration sensor" (9. Europäische Konferenz über Leistungselektronik und Anwendungen EPE 2001, 27.08.-29.08.2001 in Graz, Österreich, Tagungsband auf CD-ROM ISBN 90-75815-06-9) wird ein Geschwindigkeitsbeobachter mit einer internen PI(Proportional-Integral)-Regelung vorgeschlagen, der sich durch zwei Eingänge auszeichnet: Dem ersten Eingang sind Werte eines Lagegebers, nämlich Inkrementalgebers, differenziert bzw. in der ersten Ableitung nach der Zeit, und dem zweiten Eingang Werte eines Beschleunigungssensors zugeordnet. Der Beschleunigungswert wird nach seiner Integration über die Zeit mit dem differenzierten Lagegebersignal verglichen. Nach der Gewichtung des Differenzwerts durch den PI-Regler werden die Signale vom Lagegeber und vom Beschleunigungssensor zusammengesetzt, um einen Schätzwert für die Geschwindigkeit zu bilden. Nachteilig bei diesem Konzept ist die Notwendigkeit, einen Lagegeber einsetzen zu müssen. Bei einer Vielzahl von Anwendungen (beispielsweise High-Torque-Motoren mit Hohlwellen, Linearmotoren usw.) ist sowohl aus Kosten- als auch Konstruktionsgründen (gegebenenfalls Schwierigkeit mit einer zu findenden Anbaustelle) die Vermeidung eines Lagegebers wünschenswert.

Aus dem Beitrag "SpeedAcquisitionMethodsforHigh-BandwidthServo Drives" von A. Bähr und P. Mutschler (IAS 2005, ConferenceRecord, Bd. 1, Feb. 2005, S. 737 - 744) ist eine Vorrichtung und ein Verfahren zur Beobachtung der Antriebs-Geschwindigkeit eines Stellantriebs insbesondere für einen Antriebsregelkreis bekannt. Die Geschwindigkeits-Eingangswerte werden dabei mittels eines Inkremental-Lagegebers ermittelt.

US 2007/0040528 A1 betrifft eine Positions-sensorlose Kontrolleinrichtung für Motoren. Hierzu ist vorgesehen, die Rotor-Position wie auch dessen Geschwindigkeit anhand einer Strom- bzw. Spannungsinjektion zu bestimmen.

Zur Lösung der sich insbesondere aus den Nachteilen im Stand der Technik ergebenden Probleme werden das im Patentanspruch 1 angegebene Verfahren bzw. die im Patentanspruch 7 angegebene Anordnung jeweils zur Beobachtung, Ermittlung und/oder Aufbereitung der Rotor-Antriebsgeschwindigkeit einer elektrischen Maschine vorgeschlagen. Optionale, vorteilhafte Ausbildungen dieser Erfindung sind in den abhängigen Ansprüchen angegeben.

Auf der Basis der Erfindung läßt sich ein insbesondere geregelter Antrieb mit einem Permanentmagnet-Synchronmotor ohne Lagegeber besonders stabil, dynamisch, genau und kosteneffizient betreiben. Als Sensorik ist lediglich ein Beschleunigungssensor verlangt, der auf dem Markt in Form eines Ferraris-Beschleunigungssensors kostengünstig, in robuster Ausführung und mit höher Verfügbarkeit erhältlich ist. Erfindungsgemäß werden die Lage und die Geschwindigkeit des Permanentmagnet-Rotors zuerst von einem der an sich bekannten sensorlosen Verfahren (vgl. z. B. J. Holtz, "Perspectives of Sensorless AC Drive Technology", Konferenz PCIM Europe 2005 Power Electronics - Intelligent Motion - Power Quality, ISBN 3-928643-41-X sowie die älteren, nachveröffentlichten Patentanmeldungen EP 07 113 231.0 und EP 07 113 873.9 des vorliegenden Anmelders) ausgerechnet. Dieses Signal und das vorzugsweise mit einem Normierungsfaktor k_{ε} gewichtete Beschleunigungssignal vom Beschleunigungssensor werden dem Geschwindigkeitsbeobachter zugeführt, der ein Geschwindigkeitsausgangssignal beispielsweise für einen nachgeschalteten Regler des Antriebsregelkreises ermittelt.

Unter anderem wird mit der Erfindung der Vorteil erzielt, im Vergleich zur einzig sensorlosen Ansteuerung (lediglich anhand von Stator-Strommessungen, ohne Lage- und Beschleunigungssensorik) durch die erfindungsgemäße Kombination von (lage-) sensorloser Ansteuerung mit dem im Vergleich zum Lagegeber kostengünstigeren, unempfindlicheren Beschleunigungssensor eine verbesserte Qualität des (geschätzten) Geschwindigkeits-Ausgangssignals und damit eine bessere Regelungsgüte zu erreichen. Der Beschleunigungssensor bildet eine zusätzliche unabhängige Informationsquelle für die Geschwindigkeitsbeobachtung. Dem gegenüber ist die Güte des Geschwindigkeitssignals eines lagegeberlosen Antriebs relativ niedrig, insbesondere im Bereich kleiner Geschwindigkeiten. Dies erschwert eine präzise Drehzahlregelung.

Der Erfindung liegt die Aufgabe zugrunde, dem gegenüber das Antriebs-Lage- und Antriebs-Geschwindigkeits-Ermittlungssystem in seinem strukturellen Aufbau zu vereinfachen. Zur Lösung wird auf das nachstehend angegebene Ermittlungsverfahren, auf die nachstehend angegebene Ermittlungseinrichtung, auf das nachstehend angegebene Maschinen-Modellierungsmodul sowie auf den nachstehend angegebenen Nachführregler verwiesen.

Eine optionale Ausgestaltung der Erfindung besteht darin, dass die mit der Längsinduktivität (L_{d}) gewichtete Strom-Längskomponente (i_{d}) mit dem Vorzeichen beziehungsweise der Richtung der ermittelten Geschwindigkeit (ωₑₘ) beeinflusst wird.

Eine optionale Ausgestaltung der Erfindung besteht darin, dass im Maschinenmodell (9) die aus den beiden Wichtungsergebnissen gebildete Differenz von einer maschinenspezifischen EMK-Konstante (K_{E}) und/oder von einer Zeitkonstante (T_{ω}) beeinflusst wird.

Eine optionale Ausgestaltung der Erfindung besteht darin, dass im Maschinenmodell (9) die Differenz durch die EMK-Konstante (K_{E}) und/oder die Zeitkonstante (T_{ω}) dividiert wird, und im Nachführregler (6) die selbe EMK-Konstante (K_{E}) und/oder die selbe Zeitkonstante (T_{ω}) als Parameter für die Integration einer Differenz verwendet werden, die aus dem gegebenenfalls proportional (kₚ) verstärkten Lageermittlungsfehler (Δu_{d}) und des Geschwindigkeitsermittlungsfehlers (Δu_{q}) gebildet wird.

Eine optionale Ausgestaltung der Erfindung besteht darin, dass im Nachführregler (6) die diesem zugeführte dritte Ausgangsvariable (Δu_{L}) mit dem Ergebnis einer Integration (22) einer Differenz (21) summiert oder sonst verknüpft wird, welche aus dem gegebenenfalls proportional (kₚ) verstärkten Lageermittlungsfehler (Δu_{d}) und des Geschwindigkeitsermittlungsfehlers (Δu_{q}) gebildet wird, und das Verknüpfungsergebnis als ermittelte Geschwindigkeit (ωₑₘ) verwendet und/oder ausgegeben wird.

Eine optionale Ausgestaltung der Erfindung besteht darin, dass die Differenz (21) im Nachführregler (6) gebildet und/oder einer Integration (22) ohne Proportionalanteil unterworfen wird.

Eine optionale Ausgestaltung der Erfindung besteht darin, dass im Maschinenmodell (9) die Strom-Längsvektorkomponente (i_{d}) mit einem Proportionalfaktor (kₚ) gewichtet wird, der im Nachführregler (6) zur Regulierung dem Lageermittlungsfehler (Δu_{d}) verwendet wird.

Eine optionale Ausgestaltung der Erfindung besteht darin, dass im Maschinenmodell (9) die Eingangsschnittstelle (11) für die Strom-Längsvektorkomponente (i_{d}) einem Proportionalglied (A) mit einer Proportionalverstärkung (kₚ) zugeführt ist, und im Nachführregler (6) ein Proportionalglied (20) mit der selben oder ähnlichen Proportionalverstärkung (kₚ) angeordnet ist zur Gewichtung des Lageermittlungsfehlers (Δu_{d}).

Eine optionale Ausgestaltung der Erfindung besteht darin, dass im Maschinenmodell das Proportionalglied mit der Proportionalverstärkung (kₚ) in Reihenschaltung mit einem entsprechend dem Längsinduktivitäts-Festwert (L_{d}) dimensionierten Induktivitäts-Proportionalglied (A) angeordnet ist.

Eine optionale Ausgestaltung der Erfindung besteht darin, dass der Ausgang des Induktivitäts-Summierglieds (26) mit der dritten Ausgangsschnittstelle (27) über ein Proportionalglied (C) verbunden ist, das entsprechend einer EMK-Konstante (K_{E}) und/oder einer Zeitkonstante (T_{ω}) dimensioniert ist, und im Nachführregler (6) zur dortigen Verarbeitung einer gegebenenfalls gewichteten oder sonst bearbeiteten Kombination der d,q-Vektorkomponenten (Δu_{d}, Δu_{q}) der vom vorgeordneten Modellierungsmodul (9) zugeführten Spannungsabweichung ein erstes Integrationsglied (22) angeordnet ist, das entsprechend der selben oder ähnlichen EMK-Konstante (K_{E}) und/oder Zeitkonstante (T_{ω}) eingestellt ist.

Im Rahmen der Erfindung liegt ein Maschinen-Modellierungsmodul für eine elektrische bürstenlosen Linear- oder Rotations-Maschine mit Permanentmagnet-Läufer, die geeignet ist zum Einsatz in der obigen Ermittlungseinrichtung, welches Maschinen-Modellierungsmodul umfasst:
a) Eingangs-Schnittstellen (11) für in ein läuferbezogenes d,q-Koordinatensystem transformierte Maschinen-Längs- und - Quervektorkomponenten (i_{d},i_{q} U_{d},U_{q;}) vom Strom und einer vorgegebenen Spannung sowie für eine extern ermittelte Maschinen-Geschwindigkeit (ωₑₘ),
b) und mit mindestens zwei Ausgangs-Schnittstellen (13,14) für in das d,q-Koordinatensystem transformierte Längs- und Quervektorkomponenten (Δu_{q}, Δu_{q}) einer intern berechneten Spannungsabweichung,
c) und mit mehreren Proportionalgliedern (r,A,D) zur Gewichtung der Strom-Vektorkomponenten (id,iq) mit einem ohmschen Stator- oder Maschinenwiderstand (r) und einer oder mehreren Stator- oder Maschineninduktivitäten (L_{d},L_{q}), wobei
wenigstens noch eine dritte Ausgangsschnittstelle (27) für eine Induktivitäts-Spannungsabweichung (Δu_{L}), zu deren Erzeugung ein Längs- und ein Querinduktivitäts-Proportionalglied (A,D) mit Verstärkungen entsprechend einer Längs- beziehungsweise Querinduktivität (L_{d},L_{q}) angeordnet und eingangseitig mit den Eingangs-Schnittstellen (11) für die Strom-Längs- und Quervektorkomponenten (i_{d},i_{q}) verbunden sind, und die beiden Proportionalglied-Ausgänge mit den Eingängen eines Induktivitäts-Summierglieds (26) direkt oder indirekt gekoppelt sind, und der Ausgang des Induktivitäts-Summierglieds (26) unmittelbar oder mittelbar mit der dritten Ausgangsschnittstelle (27) gekoppelt ist.

Gemäß einer besonderen Ausführung umfasst das Maschinen-Modellierungsmodul ein Vorzeichen- beziehungsweise Signumsglied (15), das an seinem Eingang mit der Eingangs-Schnittstelle (10) für die extern ermittelte Maschinen-Geschwindigkeit (ωₑₘ) verbunden und ausgangsseitig über ein Multiplizierglied (B) mit dem Ausgang eines Proportionalgliedes (A,D) verknüpft ist, das die Strom-Längs- oder Quervektorkomponente (i_{d}, i_{q}) mit der Längs- oder Querinduktivität (L_{d},L_{q}) gewichtet.

Eine optionale Ausgestaltung der Erfindung besteht darin, dass der Ausgang des Induktivitäts-Summierglieds (26) über ein Proportionalglied (C), dessen Proportionalverstärkung über Festwerte für eine maschinenspezifische EMK-Konstante (K_{E}) und/oder Zeitkonstante (T_{ω}) bestimmt ist, der dritten Ausgangsschnittstelle (27) zugeführt ist.

Im Rahmen der Erfindung liegt ein Nachführregler (6) zur Durchführung des obigen Verfahrens oder zum Einsatz in der obigen Ermittlungseinrichtung, mit folgenden Merkmalen:
a) mit wenigstens zwei Eingangs-Schnittstellen (18,19) für in das d,q-Koordinatensystem transformierte Längs- und Quervektorkomponenten (Δu_{d}, Δu_{q}) einer extern berechneten und zugeführten Spannungsabweichung,
b) mit mindestens einer Ausgangsschnittstelle (23) für eine intern ermittelte Antriebs-Geschwindigkeit (ωₑₘ),
c) mit einem Proportionalglied (20,kp), dessen Eingang mit der Eingangsschnittstelle (18) für die Längsvektorkomponente (Δu_{d}) der extern berechneten Spannungsabweichung beziehungsweise Lageermittlungsfehler (Δu) verbunden ist,
d) mit einem ersten Nachführ-Summierglied (21), dessen erster Eingang mit dem Ausgang des Proportionalglieds (20,kₚ), und dessen zweiter Eingang über die zweite Eingangsschnittstelle (19) mit der Quervektorkomponente (Δu_{q}) der Spannungsabweichung beziehungsweise des Geschwindigkeitsermittlungsfehlers verbunden ist,
**umfassend**
wenigstens noch eine dritte Eingangsschnittstelle (28) für eine von extern zugeführte Induktivitäts-Spannungsabweichung (Δu_{L}), wobei die dritte Eingangsschnittstelle (28) mit dem ersten Eingang eines Verknüpfungsglieds verbunden ist, dessen zweiter Eingang den Ausgang des ersten Nachführ-Summierglieds (21) mittel- oder unmittelbar erfasst, und dessen Ausgang über die mindestens eine Ausgangsschnittstelle (23) für die Antriebs-Geschwindigkeit (ωₑₘ) abgreifbar ist.

Eine optionale Ausgestaltung des Nachführreglers (6) besteht darin, dass das Verknüpfungsglied als dem ersten Nachführ-Summierglied (21) mittel- oder unmittelbar nachgeordnetes, zweites Nachführ-Summierglied (29) ausgebildet ist.

Eine optionale Ausgestaltung des Nachführreglers (6) besteht darin, dass dem ersten Nachführ-Summierglied (21) und dem Verknüpfungs- oder zweiten Nachführ-Summierglied (29) einzig ein Integrationsglied (22) zwischengeordnet ist.

Eine optionale Ausgestaltung des Nachführreglers (6) besteht darin, dass das Integrationsglied (22) ohne Proportionalanteil und/oder auf der Basis der EMK-Konstante (K_{E}) und/oder Zeitkonstante (T_{ω}) dimensioniert ist.

Zwar arbeitet gemäß dem erfindungsgemäßen Verfahren das Maschinenmodell noch mit der Ausgabe einer dritten Abweichungsvariablen an den Nachführregler; jedoch wird dabei die dritte Ausgangsvariable über einfach zu realisierende Rechenschritte erzeugt, die lediglich Gewichtungen durch Proportionalglieder mit Induktivitäts-Festwerten und Summierungen/Differenzbildungen umfassen und mithin mit rechentechnisch einfachen und schnell ablaufenden Funktionskomponenten wie P-Glieder und Summierstellen zu realisieren sind. Mithin lässt sich mit dem erfindungsgemäßen Verfahren der Vorteil einer Effizienzsteigerung erzielen, zumal weder eine zeitliche Differenzierung von Strömen noch zusätzliche phasenverbrauchende Filter wie z. B. die oben beim Stand der Technik verwendeten Tiefpass-Filter notwendig sind.

Zweckmäßig werden im Rahmen des Maschinenmodells die beiden Wichtungsergebnisse (Strom-Längskomponente gewichtet mit Längsinduktivität und Strom-Querkomponente gewichtet mit Querinduktivität) entsprechend einer maschinenspezifischen EMK-Konstante oder einer Zeitkonstante modifiziert. Mit besonderem Vorteil wird dann im Nachführregler eine Integration mit den genannten Konstanten als Integrationsparameter über eine Differenz durchgeführt, die zwischen dem Lage- und dem Geschwindigkeitsermittlungsfehler ("Lageabweichung" beziehungsweise "Geschwindigkeitsabweichung") bzw. den entsprechenden Längs- und Querkomponenten der Spannungsabweichung gebildet ist.

In weiterer Ausgestaltung der Erfindung wird die dem Nachführregler zugeführte dritte Ausgangsvariable mit einem Integrationsergebnis über eine Differenz summiert oder sonst wie verknüpft, welche Differenz aus dem Unterschied zwischen des Lageermittlungsfehlers und des Geschwindigkeitsermittlungsfehlers gebildet wird. Gegebenenfalls ist der Lageermittlungsfehler vorher noch proportional verstärkt worden. Das Verknüpfungsergebnis kann dann aus dem Nachführregler als ermittelte Geschwindigkeit ausgegeben werden. Es wird der Vorteil einer Vereinfachung der Struktur des Nachführreglers erzielt, indem gegenüber reinen Integriergliedern komplexere Proportional- und Integralglieder vermieden sind.

Da gemäß einer Erfindungsvariante bei der Zuführung der dritten Ausgangsvariablen in den Nachführregler sowohl das dortige Proportionalglied (interpretierbar als "Lageregler") als auch ein reines erstes Integrationsglied ohne Proportionalanteil (interpretierbar als "Geschwindigkeitsregler") über eine diesen nachgeordnete Summierstelle übersprungen werden, ist es zweckmäßig, die (übersprungene) Proportionalverstärkung bereits im Maschinenmodell bei der Bildung der dritten Ausgangsvariablen zur Auswirkung zu bringen. Dies lässt sich realisieren, indem die Strom-Längsvektorkomponente nach Einführung in das Maschinenmodell darin mit dieser Proportionalverstärkung bzw. -faktor gewichtet wird.

Der Erfindung liegt die Aufgabe zugrunde, den Einfluss der Geschwindigkeitswerte, welche über Injektion eines Testsignals in den Statorstrom und Auswertung magnetischer Anisotropien gewonnen sind, mit zunehmender Maschinengeschwindigkeit effektiver zurückzudrängen. Zur Lösung wird auf das nachstehend angegebene Ermittlungsverfahren, auf die nachstehend angegebene Ermittlungseinrichtung, auf das nachstehend angegebene Fusionsmodul und auf das nachstehend angegebene Maschinen-Modellierungsmodul verwiesen.

Eine optionale Ausgestaltung des Ermittlungsverfahren besteht darin, dass die Gewichtungsfaktoren entsprechend einer Betragsbildungsfunktion (F) mit der ermittelten Antriebsgeschwindigkeit (ω_{ef}) als Argument gewählt werden, wobei die Betragsbildungsfunktion (F) mit zunehmenden Beträgen der Antriebsgeschwindigkeit (ωef) vorzugsweise linear abnimmt.

Gemäß einer besonderen Ausführung umfasst das Ermittlungsverfahren eine Grenzgeschwindigkeit (ωₑ₀), ab welcher die Gewichtungs-Faktoren Null betragen und/oder die Beiträge der Injektions-Geschwindigkeitswerte (45,49) unterdrückt werden.

Gemäß einer besonderen Ausführung umfasst das Ermittlungsverfahren eine Grenzgeschwindigkeit (ωₑ₀), ab welcher die Testsignalquelle (36,37) abgeschaltet wird.

Eine optionale Ausgestaltung des Ermittlungsverfahren besteht darin, dass die die gewichteten Injektions-Geschwindigkeitswerte (49,52) mit den Modell-Geschwindigkeitswerten (23) in dem Kombinationsglied (51) miteinander addiert werden.

Eine optionale Ausgestaltung des Ermittlungsverfahrens besteht darin, dass die am Ausgang des Kombinationsglieds (51) ermittelten Geschwindigkeitswerte (ωₑ) einer PT₁ - oder Tiefpass-Filterung (E) unterworfen werden.

Eine optionale Ausgestaltung der Ermittlungseinrichtung besteht darin, dass das Modellierungsmodul (9) eine Geschwindigkeits-Eingangsschnittstelle (10) aufweist, die mit der Ausgabesschnittstelle (54) des Fusionsmoduls (6) für die ermittelte Antriebs-Geschwindigkeit (ω_{ef}) verbunden ist.

Gemäß einer besonderen Ausführung umfasst die Ermittlungseinrichtung ein geschwindigkeitsabhängiges Schaltglied (39) mit Hysterese-Kennlinie, das mit der Ausgabeschnittstelle (54) für die ermittelte Antriebs-Geschwindigkeit (ω_{ef}) verbunden und zum Ansprechen bei einer oder mehreren vorbestimmten Grenzgeschwindigkeiten (ωₑ₀) ausgebildet ist, um die Kopplung der Injektionsquelle (36,37) mit den Stator-Stromleitern (i1,i2,..,in) zu unterbrechen.

Ferner kann die Ermittlungseinrichtung versehen sein mit einem zu Sperrung einer Träger-Kreisfrequenz (ω_{c}) beispielsweise der Testsignalbeziehungsweise Injektionsquelle (36,37) ausgebildeten Kerbfilter (4a), wobei das Kerbfilter (4a) eingangsseitig parallel zum Demodulationsmodul (32) mit den Stromwerten (i_{d},i_{q}) für den Statorstrom und/oder dem Ausgang einer Koordinaten-Transformationseinheit (4) zur Abbildung des Statorstroms in ein rotorbezogenes d,q-Koordinatensystem gekoppelt ist.

Eine optionale Ausgestaltung der Ermittlungseinrichtung besteht darin, dass das Kerbfilter (4a) ausgangsseitig mit einem oder mehreren Stromreglern des Antriebsregelkreises verbunden ist.

Eine optionale Ausgestaltung der Ermittlungseinrichtung besteht darin, dass das Kerbfilter (4a) zumindest mit einem Teil seines Ausgangs (i_{d_f},i_{d_q}) mit dem Eingang eines Proportionalgliedes (H), ausgebildet zur Lastfehlerkorrektur, verbunden ist, das ausgangsseitig mit einem Eingang (55) des Injesktions-Nachführreglers (31) verbunden ist.

Eine optionale Ausgestaltung des Fusionsmoduls (6) besteht darin, dass dem Ausgang des Kombinationsglieds (51) und der Ausgabesschnittstelle (54) des Fusionsmoduls (6) ein Tiefpass oder ein PT₁-Übertragungsglied (E) zwischengeschaltet ist.

Eine optionale Ausgestaltung des Fusionsmoduls (6) besteht darin, dass das Kombinationsglied (51) als Summierstelle ausgeführt ist.

Eine optionale Ausgestaltung des Fusionsmoduls (6) besteht darin, dass die Summierstelle (51) additive Eingänge mit positivem Vorzeichen für den gewichteten Ausgang (52) des Injektions-Nachführreglers (31) für den zugeführten Strom (i_{q_dem}) und den Ausgang (23) des den Spannungswerten (Δu_{d}, Δu_{q},Δu_{L}) zugeordneten Modell-Nachführreglers (30) aufweist.

Eine optionale Ausgestaltung des Fusionsmoduls (6) besteht darin, dass das Betragsbildungsglied (F) eine oder mehrere Nullstellen aufweist, welche einer oder mehreren elektrischen Grenzgeschwindigkeiten (ωₑ₀) des Läufers entsprechen.

Gemäß einer besonderen Ausführung umfasst das Maschinen-Modellierungsmodul (9) ein oder zwei Grenzgeschwindigkeiten (ωₑ₀), ab welcher oder welchen das Begrenzerglied (G) einen Maximal- und/oder Minimalwert ausgibt.

Indem gemäß Erfindung die Injektions-Geschwindigkeitswerte, bevor sie mit den Modell-Geschwindigkeitswerten in dem Kombinationsglied fusioniert werden, mit einer Gewichtungsfunktion verknüpft werden, welche mit zunehmender Geschwindigkeit vorzugsweise betragsmäßig abnehmende Gewichtungsfaktoren produziert, lässt sich das Zurückdrängen und Unterdrücken der vom Injektionsverfahren generierten Ausgangswerte im höheren Geschwindigkeitsbereich erreichen, unabhängig davon, ob die am Statorleiter angekoppelte Testsignalquelle noch aktiv oder unterdrückt ist. Damit wird ein zuverlässigeres Zurückdrängen des Injektionsverfahrens bei höheren Geschwindigkeiten, wo das Injektionsverfahren zahlreiche, in der Fachwelt beschriebene Nachteile mit sich bringt, erreicht.

Ein weiterer, mit der Erfindung erzielbarer Vorteil besteht darin, dass im niedrigen Geschwindigkeitsbereich die Modell- und Injektionsgeschwindigkeitswerte einerseits aus dem Maschinenmodell und andererseits aus dem Injektionsverfahren sich einander stabilisierend ergänzen können. Die Injektions-Geschwindigkeitswerte werden mit bis zu 100 % steigender Gewichtung in die Fusion eingebracht, wobei parallel dazu die Modell-Geschwindigkeitswerte parallel in die Ermittlung der Antriebsgeschwindigkeit einfließen. Bei niedrigem Geschwindigkeitsbereich liefert das Injektionsverfahren gute Signale, welche den Ausgang des Motormodells so zusätzlich ergänzen, zumal aus dem Motormodell mit abnehmenden Geschwindigkeitswerten die Signale schlechter werden. Gleichwohl tragen auch in dem niedrigeren Geschwindigkeitsbereich die Geschwindigkeitswerte aus dem Maschinenmodell mit zur Gesamtberechnung der Antriebsgeschwindigkeit und gegebenenfalls -lage immer noch mit bei, wenn auch im verringerten Maße.

Zur Erzeugung der Gewichtungsfaktoren für die Abschwächung der Injektions-Geschwindigkeitswerte wird gemäß einer vorteilhaften Erfindungsausbildung eine Betragsbildungsfunktion verwendet. In weiterer, optionaler Ausgestaltung dieses Gedankens nimmt die Kurve der Betragsbildungsfunktion mit zunehmenden Beträgen des Arguments (hier: Antriebsgeschwindigkeit) ab. Die Abnahme kann zweckmäßig linear erfolgen.

Gemäß einer weiteren Erfindungsausbildung wird die Gewichtungs- bzw. Betragsbildungsfunktion so gestaltet, dass ab einer vorbestimmten Grenzgeschwindigkeit die Gewichtungsfaktoren nur noch Null betragen bzw. die Beiträge der Injektions-Geschwindigkeitswerte in die Gesamtberechnung vollständig unterdrückt werden. Zweckmäßig liegt die gewählte Grenzgeschwindigkeit im Bereich zwischen 3 und 10 % der Nenndrehzahl bei Rotationsmotoren. Eine solche Grenzgeschwindigkeit oder - drehzahl kann auch als Signal zur Abschaltung der Testsignalquelle von den Stator-Stromleitem verwendet werden. Damit lässt sich die Sicherheit vor solchen Störungen erhöhen, welche bei zunehmender Antriebsgeschwindigkeit und eingeschalteter Stator-Testsignalinjektion verschärft ausgelöst werden würden. Darüber hinaus werden ohmsche Wärmeverluste wegen dem Injektionsstrom vermieden

Gemäß einer optionalen Erfindungsausbildung lässt sich das Fusions-Kombinationsglied zweckmäßig als Summier- oder Additionsglied realisieren. Beim Addieren wird in besonders einfacher Weise die komplementäre Wechselwirkung zwischen Modell- und Injektionsgeschwindigkeitswerte erreicht. Bei niedrigen Geschwindigkeiten, wo die Läufer-Rück-EMK an sich zu schwach geworden ist, kann sie über die Modell-Geschwindigkeitswerte immer noch einen Beitrag zur Stabilisierung der Injektions-Geschwindigkeitswerte liefern, welche mit niedrigem Geschwindigkeitsbereich die Hauptbasis für die Geschwindigkeitsermittlung bilden.

Zur Unterdrückung hochfrequenter Störanteile besteht eine weitere, vorteilhafte Erfindungsausbildung darin, den Ausgang des Kombinationsglieds für ermittelte Antriebs-Geschwindigkeitswerte einer Filterung mit PT₁- oder Tiefpass-Charakteristik zu unterwerfen. Als zweckmäßige Eckfrequenz haben sich 100 Hz oder eine Zeitkonstante zwischen ein und zwei Millisekunden in der Praxis bewährt.

Es liegt im Rahmen der Erfindung, dass dem mathematischen Maschinenmodell als Eingangsvariable Längs- und Querkomponenten vom Strom und einer vorgegebenen Spannung eingegeben werden, die vorher jeweils in ein läuferbezogenes d,q-Koordinatensystem transformiert sind. Analog können im Rahmen des Injektionsverfahrens dem zugehörigen Demodulator mit Bandpass-Filter als Eingangsvariable Längs- und Querkomponenten vom Stator-Strom eingegeben werden, welche auch vorher in ein läuferbezogenes d,q-Koordinatensystem transformiert sind.

Indem beim erfindungsgemäßen Fusionsmodul zwei voneinander unabhängig und parallel arbeitende Spannungs- bzw. Injektions-Nachführregler, zugeordnet einerseits dem mathematischen Maschinenmodell und andererseits dem Injektionsverfahren, vorgesehen sind, können bei niedrigen Drehzahlen die Modell-Geschwindigkeitswerte die Injektions-Geschwindigkeitswerte im Kombinationsglied stabilisierend unterstützen, obgleich sie aufgrund zu schwacher Läufer-Rück-EMK für sich allein nicht mehr zur Lieferung von Antriebs-Geschwindigkeitswerten geeignet wären. Es wird der Weg zu einer Verbesserung der Geschwindigkeitsermittlung im niederen Drehzahlbereich eröffnet, erzielbar aufgrund der beiden parallel für das Maschinenmodell und das Injektionsverfahren arbeitenden Modell- und Injektions-Nachführregler. In weiterer optionaler Ausgestaltung sind die beiden Nachführregler über ihre jeweiligen Ausgänge im Kombinationsglied gekoppelt (entsprechend Anspruch 14, Merkmal c).

Weitere Einzelheiten, Merkmale, Merkmalskombinationen, Vorteile und Wirkungen auf der Basis der Erfindung ergeben sich aus der nachfolgenden Beschreibung bevorzugter Ausführungsformen der Erfindung sowie aus den Zeichnungen. Diese zeigen in:
Figur 1 ein schematisches Blockschaltbild einer erfindungsgemäßen Anordnung mit Geschwindigkeits-Beobachter;
Figur 2 jeweils über die Zeit übereinander dargestellte und im praktischen Betrieb gemessene Verläufe von Statorstrom, ermittelter Winkelgeschwindigkeit, gemessene Winkellage und gemessene Winkelgeschwindigkeit eines nach dem Stand der Technik allein mit einem lagesensorlosen Ermittlungsverfahren ausgeführten Antriebsregelkreises, d. h. ohne Ergänzung durch einen Ferraris-Beschleunigungssensor;
Figur 3 entsprechende, praktisch gemessene Betriebsdiagramme über die Zeit, wobei der Antriebsregelkreis im Rahmen der erfindungsgemäßen Anordnung durch einen Ferraris-Beschleunigungssensor ergänzt ist;
Figur 4 in Blockschaltbild-Darstellung als gedanklichen Ausgangspunkt einen Antriebsregelkreis mit einem Motormodell und einem nachgeschalteten, erfindungsgemäßen Nachführregler, wobei zum besseren Verständnis das Maschinenmodell noch die nachteiligen, direkten zeitlichen Ableitungen von Strömen enthält;
Figur 5 in entsprechender Darstellung einen Antriebsregelkreis mit erfindungsgemäß ausgestaltetem Motormodell und entsprechend angepasstem Nachführregler;
Figur 6 in schematischer Blockschaltbild-Darstellung eine (lage-)sensorlose Antriebsregelung mit der Ausbildung eines Lage- und Geschwindigkeits-Ermittlungssystems

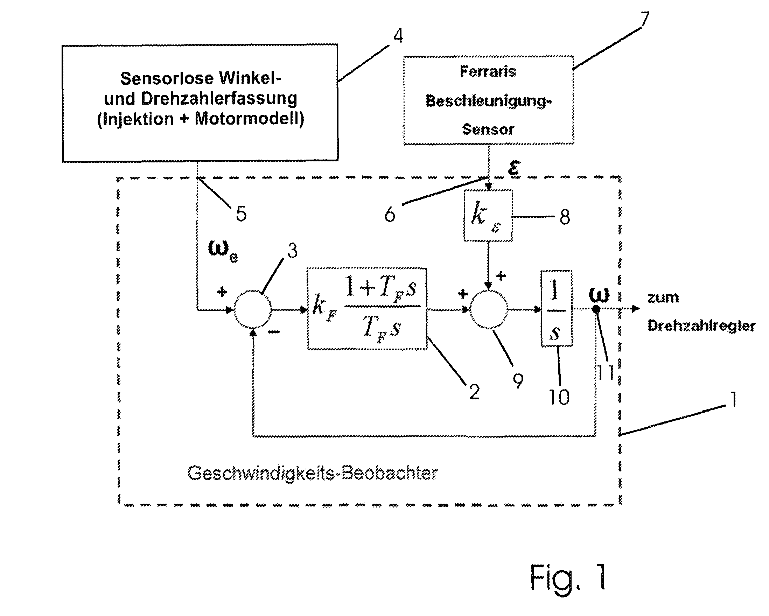

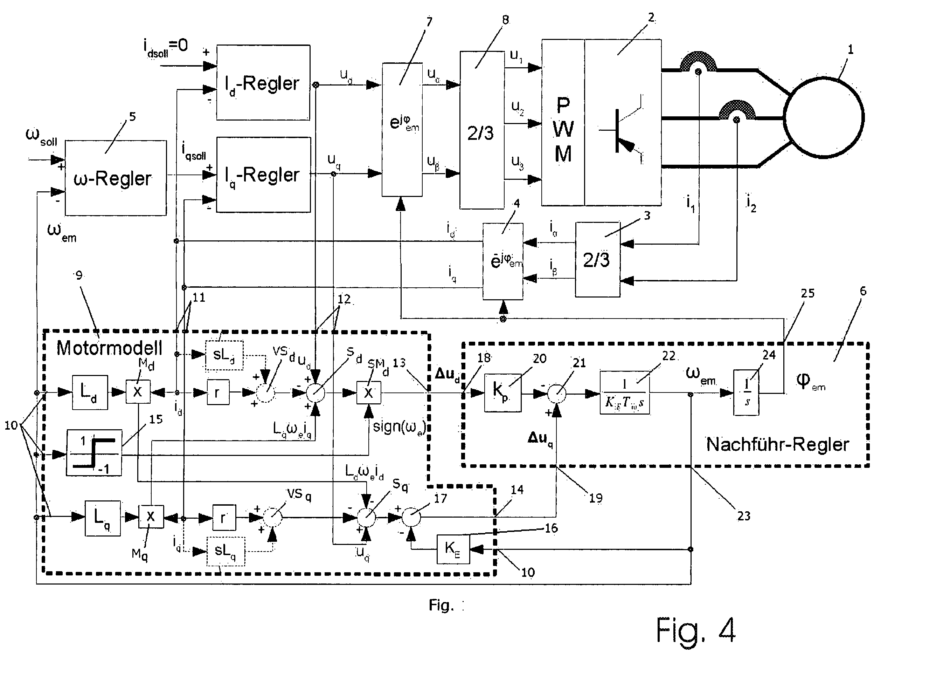

Gemäß Figur 1 ist der Geschwindigkeitsbeobachter 1 intern mit einem PI-Regler 2 (proportional-integral wirkender Regler) realisiert, welcher eingangsseitig mit einem Soll-/Istwert-Vergleicher 3 verbunden ist. Dessen positivem Eingang wird ein Geschwindigkeitseingangswert ωe zugeführt, welcher mittels einer externen Recheneinheit 4 anhand mehrphasiger Motorstrommessungen berechnet wurde. Der Berechnung können an sich bekannte mathematische Motormodelle oder mit einem Motormodell kombinierte Injektionsverfahren dienen. Das Motormodell oder das mit einem Motormodell kombinierte Injektionsverfahren kann auch neuartig entsprechend den nachfolgend näher erläuterten Figuren 4-6 ausgeführt sein. Zur Verbindung mit der externen Recheneinheit 4 ist der Geschwindigkeitsbeobachter 1 mit einem ersten Eingang 5 für Geschwindigkeitswerte versehen.

Gemäß Figur 1 ist der Geschwindigkeits-Beobachter 1 mit einem zweiten Eingang 6 für Beschleunigungswerte beispielsweise aus einem Ferraris-Beschleunigungssensor 7 versehen. Der Beschleunigungswerte-Eingang 6 führt direkt zu einem Normierungs-Proportionalglied 8, welches den zugeführten Beschleunigungswert mit dem Normierungsfaktor k_{ε} gewichtet. Die Ausgänge sowohl des PI-Reglers 2 als auch des Proportionalglieds 8 werden jeweils mit positivem Vorzeichen einer Summierstelle 9 zugeführt, deren Ausgang ein Integrator 10 nachgeschaltet ist. Dessen Ausgang, welcher einen vom Geschwindigkeitsbeobachter 1 geschätzten Geschwindigkeits-Ausgangswert cm darstellt, ist mit negativem Vorzeichen dem Negativ-Eingang des Soll-/Istwertvergleichers 3 rückgeführt. Ferner wird über eine Verzweigungsstelle 11 1 der Geschwindigkeits-Ausgangswert ω beispielsweise einem nachgeordneten (nicht näher dargestellten) Drehzahlregler zur Verfügung gestellt. Beispielsweise könnte der Geschwindigkeits-Ausgangswert ω mit negativem Vorzeichen als mit verbesserter Güte aufbereiteter Istwert dem jeweiligen ω-Regler 5 gemäß nachstehend erläuterten Figuren 4-6 zugeführt werden, dabei die ermittelte elektrische Drehzahl ωₑₘ beziehungsweise ω_{ef} aus dem jeweiligen Motormodell 9 (gegebenenfalls kombiniert mit Injektionsverfahren) ersetzend. Die ermittelte elektrische Drehzahl ωₑₘ beziehungsweise ω_{ef} ist dann dem ersten Eingang 5 für Geschwindigkeitswerte des Geschwindigkeitsbeobachters 1 zuzuführen. Beim Pl-Regler 2 stellen, wie an sich bekannt, k_{F} einen Proportionalitätsfaktor und T_{F} einen Zeitfaktor (Nachstellzeit) dar.

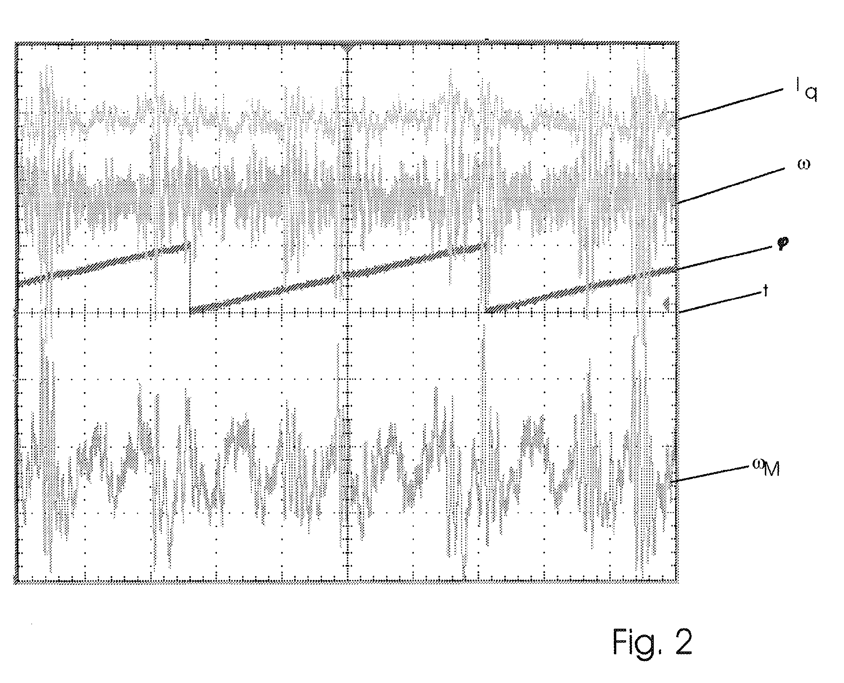

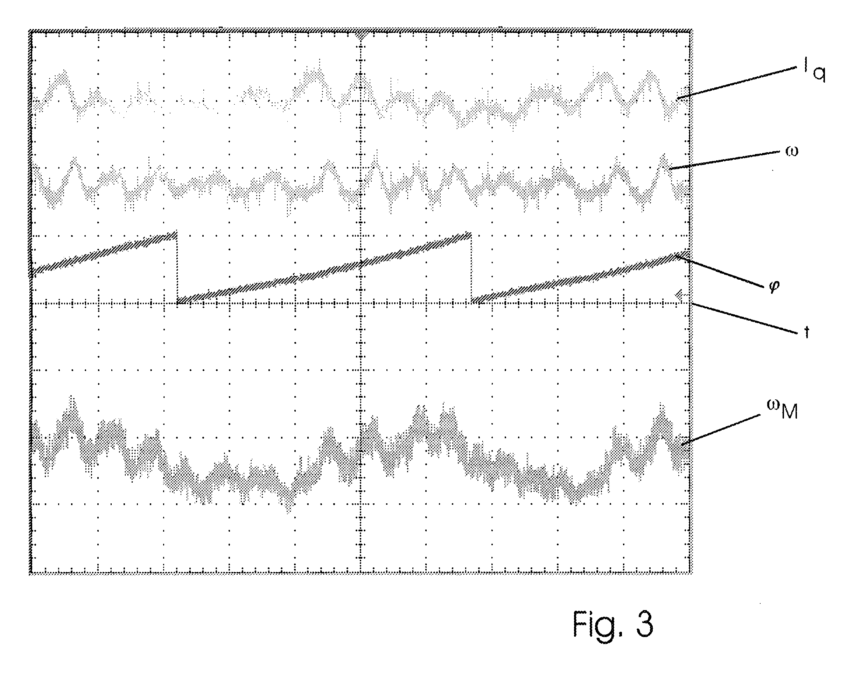

In Figur 2 (ohne Ferraris-Beschleunigungssensor) und 3 (mit Ferraris-Beschleunigungssensor) sind untereinander über dieselbe Zeitachse t die jeweils im praktischen Betrieb gemessenen Verläufe einer Drehmoment bildenden Querstrom-Vektorkomponente I_{q}, des (vom Geschwindigkeitsbeobachter 1 geschätzten) Geschwindigkeits-Ausgangswerts ω, der elektrischen Winkellage ϕ sowie der mittels eines Inkrementalgebers gemessenen, realen Geschwindigkeit ω_{M} (bzw. Drehzahl), letztere als Vergleichsreferenz. Ein Vergleich von Figur 2 mit Figur 3 zeigt den stabilisierenden Einfluss eines ergänzend eingesetzten Beschleunigungssensors: Während nach Figur 2 beim Betrieb allein mit einer (lage-)sensorlosen Winkel- und Drehzahlerfassung und nur mit mehrphasigen Strommessungen der Statorstrom I_{q} und die Winkelgeschwindigkeiten auffällig hohe hochfrequente Anteile aufweisen ("Zappeln"), sind die Verläufe bei der erfindungsgemäßen Hinzu-Kombination des Ferraris-Beschleunigungssensors unter Vermeidung von "Zappeln" erheblich beruhigt und stabilisiert, trotz einer relativ hohen Reglerverstärkung von 180 pro Sekunde statt 100 pro Sekunde bei Betrieb ohne Ferraris-Sensor.

### Bezugszeichenliste zu Figuren 1-3

- 1: Geschwindigkeits-Beobachter
- 2: PI-Regler
- 3: Soll-/Istwertvergleicher
- ωₑ: Geschwindigkeits-Eingangswert
- 4: Recheneinheit
- 5: Geschwindigkeitswerte-Eingang
- 6: Beschleunigungswerte-Eingang
- ε: Beschleunigungs-Eingangswerte
- 7: Beschleunigungssensor
- 8: Normierungs-Proportionalglied
- 9: Summierstelle
- 10: Integrator
- ω: (geschätzter) Geschwindigkeits-Ausgangswert
- 11: Verzweigungsstelle
- t: Zeitachse
- I_{q}: Querstrom-Vektorkomponente
- ϕ: elektrische Winkellage
- ω_{M}: gemessene Geschwindigkeit

Gemäß Figur 1 ist der Stator 1 einer bürstenlosen elektrischen Maschine, beispielsweise eines Synchronmotors mit Permanentmagnet-Läufer, von einem auf der Basis von Pulsweitenmodulation (PWM) arbeitenden Umrichter 2 mit einem dreiphasigen Drehstrom betrieben. Für eine Stromregelung werden vom Stator die beiden Phasenströme i₁, i₂ abgegriffen bzw. gemessen, welche in einer 3-zu-2 Phasen-Transformationseinheit 3 auf ein statorbezogenes, orthogonales α, β-Koordinatensystem abgebildet werden. Im Zuge der Transformation werden zwei den Statorstrom repräsentierende α, β Vektorkomponenten i_{α}, i_{β} erzeugt und an eine zweite, nachgeordnete Koordinaten-Transformationseinheit 4 ausgegeben. Diese ist dazu ausgebildet, eine Koordinatentransformation vom statorbezogenen α,β-Koordinatensystem zum rotorbezogenen d,q-Koordinatensystem mit der Ausgabe der Strom-Längs- und Quervektorkomponenten i_{d}, i_{q} vorzunehmen. Die Längs- und Quervektorkomponenten i_{d}, iq vom Statorstrom werden als Istwerte den Längsstrom- und Querstromreglern I_{d}, I_{q} zum Soll-/Istwert-Vergleich mit entsprechenden Längs- und Querstrom-Sollwerten i_{dsoll}, i_{qsoll} zugeführt. Wie an sich in der Fachwelt üblich, wird die Längsstrom-Sollwertvorgabe i_{dsoll} auf Null gesetzt, während der Querstromregler die Sollwertvorgabe I_{qsoll} von einem vorgeordneten Geschwindigkeitsregler 5 empfängt. Dieser geht von einem Vergleich eines Drehzahlsollwerts ωₛₒₗₗ mit dem von einem Nachführregler 6 ausgegebenen Schätz- bzw. Ermittlungswert für eine elektrische Drehzahl ωₑₘ aus. Aus dem Nachführregler 6 wird ferner ein ermittelter elektrischer Winkel ϕₑₘ ausgegeben und der zweiten Transformationseinheit 4 sowie einer zu dieser komplementären dritten Transformationseinheit 7 zugeführt. Die dritte Transformationseinheit 7 empfängt ferner die von den Stromreglern I_{d}, I_{q} vorgegebenen Längs- und Querspannungs-Vektorkomponenten u_{g}, u_{q} und bildet diese in das statorbezogene α, β-Koordinatensystem mit den vorgegebenen Spannungsvektorkomponenten u_{α}, u_{β} ab. Letztere Spannungsvektorkomponenten werden von einer nachgeordneten, 2-zu-3 Phasen Transformationseinheit 8 empfangen, welche die Spannungsvorgabe in drei dem Drehstromsystem entsprechende Phasen u₁, u₂, u₃ für den nachgeordneten Umrichter 2 umsetzt.

Gemäß Figur 1 ist dem Nachführregler 6 ein Motor-Modellierungsmodul 9 vorgeordnet. Dieses weist Eingangsschnittstellen 10 für die ermittelte Drehzahl ω_{em,} 11 für die gemessenen und in das d,q-Koordinatensystem abgebildeten Längs- bzw. Querströme i_{d}, iq und 12 für die im d,q-Koordinatensystem vorgegebenen Längs- und Querspannungen u_{d}, u_{q} auf. Ferner weist das Modellierungsmodul 9 eine erste Ausgangsschnittstelle 13 für die Längsspannungsabweichung Δu_{d} und eine zweite Ausgangsschnittstelle 14 für die Querspannungsabweichung Δu_{q} auf.

Gemäß Figur 1 wird die über die Drehzahl-Eingangsschnittstellen 10 dem Motormodell 9 zugeführte, ermittelte Drehzahl ωₑₘ mit mehreren separaten Proportionalgliedern gewichtet, deren Verstärkungen der EMK-Konstante K_{E}, der Motor-Längsinduktivität L_{d} und der Motor-Querinduktivität L_{q} entsprechen. Ferner wird die eingegebene Drehzahl ωₑₘ noch mit einem Signumsglied 15 gewichtet. Die Ausgänge der Induktivitäts-Proportionalglieder L_{d}, L_{q} sind jeweils mit einem eigens zugeordneten Multiplizierglied M_{d}, M_{q} verbunden. Die zweiten Eingänge der Multiplizierglieder M_{d}, M_{q} sind jeweils mit der entsprechenden der beiden Strom-Eingangsschnittstellen 11 für Längs- bzw. Querstrom i_{d}, i_{q} verbunden. Die jeweiligen Ausgänge der Multiplizierglieder M_{d}, M_{q} sind Längsspannungs- bzw. Querspannungs-Summiergliedern S_{d}, S_{q} jeweils mit positivem Vorzeichen zugeführt. Einem jeweils zweiten Eingang der Längs- bzw. Quer-Spannungssummierglieder S_{d}, S_{q} sind über die Spannungs-Eingangsschnittstellen 12 die Längs- bzw. Querspannungsvorgaben u_{d}, u_{q} auch mit jeweils positivem Vorzeichen zugeführt. Die beiden Spannungs-Summierglieder S_{d}, S_{q} besitzen jeweils noch einen zusätzlichen Negativ-Eingang (mit jeweils negativem Vorzeichen), denen ein jeweiliger Ausgang zweier vorgeordneter Spannungs-Vorsummierglieder VS_{d} bzw. VS_{q} für die Summation von ohmschen und induktiven Längs- bzw. Querspannungs-Zwischenwerten zugeordnet ist, die aus den über die Strom-Eingangsschnittstellen 11 zugeführten Längs- und Querströme erzeugt werden. Zu dieser Erzeugung dienen einerseits je ein Proportionalglied mit der dem ohmschen Motorwiderstand entsprechenden Verstärkung r. Andererseits werden, wie von der Motorphysik gefordert, die induktiven Elemente bzw. die Längs- und Querinduktivität L_{d}, L_{q}, über jeweilige Differenzierglieder sL_{d} und sL_{q} (s: differenzierender Laplace-Operator) mit in die Berechnung der Spannungszwischenwerte eingebracht. Die Eingänge der jeweiligen Proportionalglieder r und Differenzierglieder sL_{d}, sL_{q} sind dazu mit den jeweiligen Strom-Eingangsschnittstellen 11 verbunden. Die Ausgänge der jeweiligen Proportionalglieder r und der jeweiligen Differenzierglieder sL_{d} bzw. sL_{q} sind dann mit den jeweiligen Eingängen positiven Vorzeichens der Vorsummierglieder VS_{d}, VS_{q} verbunden.

Gemäß Figur 1 ist das Signumsglied 15 eingangsseitig mit der Drehzahl-Eingangsschnittstelle 10 und ausgangsseitig mit dem ersten Eingang eines Vorzeichen-Multipliziergliedes SM_{d} verbunden. Dessen zweiter Eingang kommuniziert mit dem Ausgang des Längsspannungs-Summiergliedes S_{d}, und der Ausgang des Vorzeichen-Multipliziergliedes SM_{d} steht mit der ersten Ausgangsschnittstelle 13 für die Längsvektorkomponente Δu_{d} der Spannungsabweichung in Verbindung. Dadurch lässt sich die Richtung des Läufers der elektrischen Maschine in die Berechnung des Lageermittlungsfehlers mit einbeziehen.

Gemäß Figur 1 fließt bei der Berechnung des Geschwindigkeitsermittlungsfehlers in Form der Quervektorkomponente Δu_{q} der Spannungsabweichung noch die EMK-Motorkonstante über ein mit entsprechender Verstärkung dimensioniertes Proportionalglied 16 mit ein. Das EMK-Proportionalglied ist dazu eingangsseitig mit der Drehzahl-Eingangsschnittstelle 10 verbunden. Ausgangsseitig ist das EMK-Proportionalglied 16 mit dem Minus-Eingang eines EMK-Summierglieds 17 verbunden, dessen Plus-Eingang mit dem Ausgang des Querspannungs-Summierglieds S_{q} kommuniziert. Der Ausgang des EMK-Summierglieds 17 geht direkt auf die zweite bzw. Querspannungsabweichungs-Ausgangsschnittstelle 14 des Modellierungsmoduls zur Ausgabe des Geschwindigkeitsermittlungsfehlers an den nachgeordneten Nachführregler 6.

Gemäß Figur 1 besitzt der Nachführregler zwei Eingangsschnittstellen 18, 19 für die Längs- und Quervektorkomponenten Δu_{d}, Δu_{q} der im Modellierungsmodul 9 berechneten Spannungsabweichung. Die Längsvektorkomponente entspricht des Lageermittlungsfehlers, und die Quervektorkomponente dem Geschwindigkeitsermittlungsfehler. Die Eingangsschnittstelle 18 für die Längsspannungsabweichung Δu_{d} ist direkt einem Proportionalglied 20 zugeführt, welches mit der Proportionalverstärkung kₚ dimensioniert ist und ausgangsseitig mit dem Minus-Eingang eines ersten Nachführ-Summierglieds 21 verbunden ist. Dessen Plus-Eingang ist intern im Nachführ-Regler 6 direkt mit der Eingangsschnittstelle für die Querspannungsabweichung Δu_{q} verbunden. Das Summierergebnis wird ausgangsseitig einem ersten Integrationsglied 22 zugeführt, das erfindungsgemäß ohne Proportionalanteil ausgeführt und auf der Basis der EMK-Konstante K_{E} und einer Zeitkonstante T_{ω} bemessen ist. An dessen Ausgang entsteht per Integration der Differenz der Längs- und Querspannungsabweichung über die Zeit die ermittelte Antriebs-Winkelgeschwindigkeit bzw. Drehzahl ωₑₘ, welche über eine erste Nachführregler-Ausgangsschnittstelle 23 sowohl dem Maschinen-Modellierungsmodul 9 als auch dem Geschwindigkeitsregler 5 gleichsam als Istwert bzw. zum Vergleich mit einem Geschwindigkeitssollwert ωₛₒₗₗ und zur Berechnung eines Vorgabe-Querstromwerts i_{qsoll} zu geführt wird. Ferner wird intern im Nachführregler 6 die ermittelte Antriebsgeschwindigkeit ωₑₘ noch mit einem zweiten Integrationsglied 24 verarbeitet, welches daraus in an sich bekannter Weise die elektrische Antriebs-Lage beziehungsweise Winkellage berechnet und über die zweite Nachführregler-Ausgangsschnittstelle 25 ausgibt. Wie bereits oben angesprochen, dient die elektrische Antriebslage ϕₑₘ, ausgegeben über die zweite Nachführregler-Ausgangsschnittstelle, zur Steuerung bzw. Kontrolle der beiden α,β/d,q bzw. d,q/α,β-Transformationseinheiten 4, 7. Der erfindungsgemäße Nachführregler zeichnet sich bereits allein durch die vereinfachte I-Struktur mit zwei mittelbar aufeinander folgenden Integriergliedern 22, 24 aus.

In Figur 2 ist ein gegenüber Figur 1 modifiziertes Steuerungs- bzw. Antriebsregelungssystem dargestellt. Die Modifikationen manifestieren sich vor allem in den mit A-D gekennzeichneten Blöcken des Modellierungsmoduls 9 und einer dritten Eingangsschnittstelle 28 des Nachführreglers 6.

Gemäß Figur 2 sind im Vergleich zur Modellierungsanordnung nach Figur 1 die dortigen Induktivitäts-Differenzierglieder sL_{d}, sL_{q} ersetzt durch Induktivitätsproportionalglieder A, D mit der Längs- bzw. Querinduktivität L_{d}, L_{q} als jeweiliger Verstärkungsfaktor. Dem Induktivitätsproportionalglied A kann noch in Reihenschaltung ein weiteres Proportionalglied entsprechend dem oben im Zusammenhang mit dem Nachführ-Regler 6 genannten Proportionalglied 20 (interpretierbar als "Lageregulierungsglied") vor- oder nachgeschaltet sein. Dem Ausgang des für die Längsvektorkomponente zuständigen Induktivitäts-Proportionalgliedes A ist ein Multiplizierglied B nachgeordnet, dessen zweiter Eingang mit dem Ausgang des bereits genannten Signumsglieds 15 verbunden ist, wodurch die Richtung der Läuferdrehung oder -Linearbewegung mit einbezogen wird. Der Ausgang des Multipliziergliedes A ist auf den Plus-Eingang eines Induktivitäts-Summiergliedes 26 geführt, dessen zweiter Eingang, verknüpft mit negativem Vorzeichen, mit dem Ausgang des für die Querstromkomponente zuständigen Induktivitäts-Proportionalgliedes D verbunden ist. Der sich am Ausgang des Induktivitäts-Summiergliedes 26 ergebende Differenzwert wird noch mit einem zugeordneten Proportionalglied C gewichtet, das ausgangsseitig mit der dritten Ausgangsschnittstelle 27 für die Induktivitätsspannungsabweichung Δu_{L} verbunden und entsprechend der maschinenspezifischen EMK-Konstante K_{E} und der Zeitkonstante T_{ω} dimensioniert ist.

Gemäß Figur 2 wird der an der dritten Ausgangsschnittstelle 27 bzw. am Ausgang des Proportionalgliedes C ausgegebene Wert für die Induktivitäts-Spannungsabweichung Δu_{L} der dritten Eingangsschnittstelle 28 des Nachführreglers 6 eingegeben. Intern wird die Spannungsabweichung Δu_{L} im Nachführ-Regler einem zweiten Nachführ-Summierglied 29 mit positivem Vorzeichen zugeführt. Dem zweiten Eingang des zweiten Nachführ-Summierglieds 29 ist der Ausgang des ersten Integrationsglieds 22 ebenfalls mit positivem Vorzeichen zugeordnet. Der Ausgang des zweiten Nachführ-Summierglieds 29 steht direkt mit der ersten Nachführregler-Ausgangsschnittstelle 23 zur Rückkopplung der ermittelten Antriebs-Geschwindigkeit ωₑₘ sowie mit dem Eingang des zweiten Integrationsgliedes 24 zur Ermittlung und Ausgabe der Antriebslage ϕₑₘ an die zweite und dritte Koordinaten-Transformationseinheit 4, 7 in Verbindung.

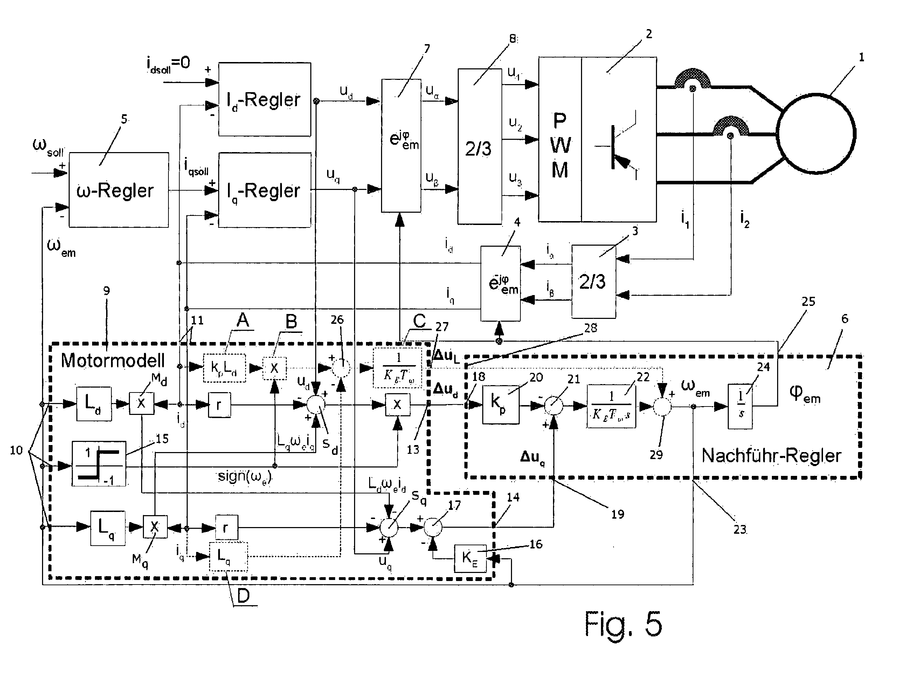

Den beiden Ausführungsbeispielen gemäß Figuren 4 und 5 ist gemeinsam, dass die Lage- und Geschwindigkeitsermittlung "sensorisch" allein über Messungen der Statorströme I₁, I₂ erfolgt.

### Bezugszeichenliste zu Figuren 4 und 5

- 1: Stator
- 2: Umrichter
- 3: 3-zu-2 Phasen-Transformationseinheit
- 4: zweite Koordinaten-Transformationseinheit
- i_{α}, i_{β}: Stromkomponenten im statorbezogenen α, β-Koordinatensystem
- i_{dsoll}, i_{qsoll}: Längs- bzw. Querstromsollwert
- I_{d}, I_{q}: Längs- und Querstromregler
- 5: Geschwindigkeitsregler
- 6: Nachführregler
- ωₛₒₗₗ: Drehzahlsollwert
- ωₑₘ: ermittelte elektrische Drehzahl
- ϕₑₘ: ermittelte elektrische Winkellage
- 7: dritter Koordinaten-Transformationseinheit
- u_{d}, u_{q}: Längs- bzw. Querspannungsvorgaben
- u_{α}, u_{β}: Spannungsvorgabe im α, β-Koordinatensystem (statorbezogen)
- 8: 2-zu-3 Phasen-Transformationseinheit
- u₁, u₂, u₃: Spannungsvorgabe für drei Phasen
- 9: Motor-Modellierungsmodul
- 10: Drehzahl-Eingangsschnittstellen
- 11: Strom-Eingangsschnittstellen
- 12: Spannungs-Eingangsschnittstelle
- 13, 14: erste und zweite Ausgangsschnittstelle für intern berechnete Spannungsabweichungs-Vektorkomponenten
- K_{E}: EMK-Konstante
- 15: Signumsglied
- M_{d}, M_{q}: Multiplizierglieder
- S_{d}, S_{q}: Spannungssummierglieder
- VS_{d}, VS_{q}: Vorsummierglieder
- r: Proportionalglied für Motorwiderstand
- sL_{d}, sL_{q}: Längs-, Querstrom-Differenzierglied
- SM_{d}: Vorzeichen-Multiplizierglied
- Δu_{d}: Längsvektorkomponente
- Δu_{q}: Quervektorkomponente
- 16: EMK-Proportionalglied
- 17: EMK-Summierglied
- 18, 19: Eingangsschnittstellen für Längs- und Querspannungsabweichung
- 20: Proportionalglied
- 21: erstes Nachführ-Summierglied
- 22: erstes Integrationsglied
- 23: erste Nachführregler-Ausgangsschnittstelle
- 24: zweites Integrationsglied
- 25: zweite Nachführregler-Ausgangsschnittstelle
- A,D: Induktivitäts-Proportionalglieder
- B: Multiplizierglied
- 26: Induktivitäts-Summierglied
- C: Proportionalglied
- 27: dritte Ausgangsschnittstelle
- 28: dritte Eingangsschnittstelle
- 29: zweites Nachführ-Summierglied

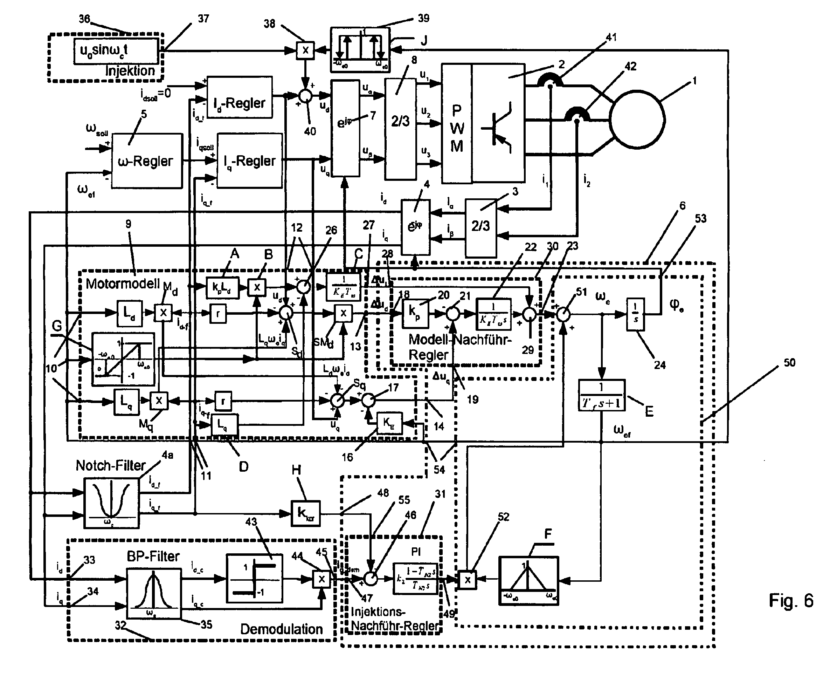

Gemäß Figur 6 ist der Stator 1 einer bürstenlosen elektrischen Maschine, beispielsweise eines Synchronmotors mit Permanentmagnet-Läufer (nicht gezeichnet), von einem auf der Basis von Pulsweitenmodulation (PWM) arbeitenden Umrichter 2 mit einem dreiphasigen Drehstrom betrieben. Für eine Stromregelung werden über Stromsensoren 41,42 vom Stator 1 die beiden Phasenströme i₁, i₂ abgegriffen bzw. gemessen, welche in einer 3-zu-2 Phasen-Transformationseinheit 3 auf ein statorbezogenes, orthogonales α, β-Koordinatensystem abgebildet werden. Im Zuge der Transformation werden zwei den Statorstrom repräsentierende α, β Vektorkomponenten i_{α}, i_{β} erzeugt und an eine zweite, nachgeordnete Koordinaten-Transformationseinheit 4 ausgegeben. Diese ist dazu ausgebildet, eine Koordinatentransformation vom statorbezogenen α,β-Koordinatensystem in ein rotorbezogenes d,q-Koordinatensystem mit der Ausgabe der Strom-Längs- und Quervektorkomponenten i_{d}, i_{q} vorzunehmen. Diese Strom-Vektorkompenten werden einem Notch- bzw. Kerbfilter 4a mit einer mittigen Sperrfrequenz, die einer injizierten Träger-Kreisfrequenz ω_{c} (siehe Erläuterungen weiter unten) entspricht. Es dient dazu, die durch die Injektion erscheinenden hochfrequenten Anteile aus den Strom-Längs- und Quervektorkomponenten i_{d}, i_{q} herauszufiltern. Die "nicht mehr verschmutzten" Strom-Vektorkomponenten i_{d-f}, i_{q-f} am Kerbfilterausgang vom Statorstrom werden als Istwerte den Längsstrom- und Querstromreglern I_{d}, I_{q} zum Soll-/Istwert-Vergleich mit entsprechenden Längs- und Querstrom-Sollwerten i_{dsoll}, i_{qsoll} zugeführt. Wie an sich in der Fachwelt üblich, wird die Längsstrom-Sollwertvorgabe i_{dsoll} auf Null gesetzt, während der Querstromregler die Sollwertvorgabe I_{qsoll} von einem vorgeordneten Geschwindigkeitsregler 5 empfängt. Dieser geht von einem Vergleich eines Drehzahlsollwerts ωₛₒₗₗ mit dem von einem Fusionsmodul 6 ausgegebenen Schätz- bzw. Ermittlungswert für eine elektrische, tiefpassgefilterte (siehe Block E) Drehzahl ω_{ef} aus. Aus dem Fusionsmodul 6 wird ferner ein ermittelter elektrischer Winkel ϕₑ ausgegeben und der zweiten Transformationseinheit 4 sowie einer zu dieser komplementären dritten Transformationseinheit 7 zugeführt. Die dritte Transformationseinheit 7 empfängt ferner die von den Stromreglern I_{d}, I_{q} vorgegebenen Längs- und Querspannungs-Vektorkomponenten u_{d}, u_{q} und bildet diese in das statorbezogene α, β-Koordinatensystem mit den vorgegebenen Spannungsvektorkomponenten u_{α}, u_{β} ab. Letztere Spannungsvektorkomponenten werden von einer nachgeordneten, 2-zu-3-Phasen Transformationseinheit 8 empfangen, welche die Spannungsvorgabe in drei dem Drehstromsystem entsprechende Phasen u₁, u₂, u₃ für den nachgeordneten Umrichter 2 umsetzt.

Gemäß Figur 6 ist dem Fusionsmodul 6 ein Motor-Modellierungsmodul 9 vorgeordnet. Dieses weist Eingangsschnittstellen 10 für die ermittelte, gefilterte Drehzahl ω_{ef}, Eingangsschnittstellen 11 für die gemessenen in das d,q-Koordinatensystem abgebildeten und kerbgefilterten Längs- bzw. Querströme i_{d-f}, i_{q-f} und Eingangsschnittstellen 12 für die im d,q-Koordinatensystem vorgegebenen Längs- und Querspannungen u_{d}, u_{q} auf. Ferner weist das Modellierungsmodul 9 eine erste Ausgangsschnittstelle 13 für die Längsspannungsabweichung Δu_{d} und eine zweite Ausgangsschnittstelle 14 für die Querspannungsabweichung Δu_{q} auf.

Gemäß Figur 6 wird die über die Drehzahl-Eingangsschnittstellen 10 dem Motormodell 9 zugeführte, ermittelte, gefilterte Drehzahl ω_{ef} mit mehreren separaten Proportionalgliedern gewichtet, deren Verstärkungen der EMK-Konstante K_{E}, der Motor-Längsinduktivität L_{d} und der Motor-Querinduktivität Lq entsprechen. Ferner wird die eingegebene Drehzahl ω_{ef} noch mit einem Begrenzungsglied G gewichtet. Dieses hat für MaschinenGeschwindigkeiten, die außerhalb eines Intervalls bzw. Fensters für den kleineren, dem Injektionsverfahren zugeordneten Geschwindigkeitsbereich von -ωₑ₀ bis +ωₑ₀ liegen, also dem dem Motormodell zugeordneten, größeren Geschwindigkeitsbereich angehören, Vorzeichen- bzw. Signumsfunktion. Wird die Maschinen-Geschwindigkeit bzw. -Drehzahl sehr klein, dann sorgt der Abschnitt mit der vorzugsweis konstanten Steigung des Begrenzungsglieds G dafür, dass ein unstabiles Hin- und Herschalten zwischen positivem und negativem Vorzeichen vermieden ist. Das Begrenzungsglied G trägt also dazu bei, im Bereich der niedrigeren, dem Injektionsverfahren zugeordneten Drehzahlen dafür zu sorgen, dass auch aus dem Motormodell weiterhin stabilisierende Beiträge zur Gesamt-Geschwindigkeitsermittlung geliefert werden.

Die Ausgänge der Induktivitäts-Proportionalglieder L_{d}, L_{q} sind jeweils mit einem eigens zugeordneten Multiplizierglied M_{d}, M_{q} verbunden. Die zweiten Eingänge der Multiplizierglieder M_{d}, M_{q} sind jeweils mit der entsprechenden der beiden Strom-Eingangsschnittstellen 11 für (kerbgefilterten) Längs- bzw. Querstrom i_{d_f}, i_{q_f} verbunden. Die jeweiligen Ausgänge der Multiplizierglieder M_{d}, M_{q} sind Längsspannungs- bzw. Querspannungs-Summiergliedern S_{d}, S_{q} jeweils mit negativem (M_{d}) und positivem Vorzeichen (M_{q}) zugeführt. Einem jeweils zweiten Eingang der Längs- bzw. Quer-Spannungssummierglieder S_{d}, S_{q} sind über die Spannungs-Eingangsschnittstellen 12 die Längs- bzw. Querspannungsvorgaben u_{d}, u_{q} mit jeweils positivem Vorzeichen zugeführt. Die beiden Spannungs-Summierglieder S_{d}, S_{q} besitzen jeweils noch einen zusätzlichen Negativ-Eingang (mit jeweils negativem Vorzeichen), denen ein jeweiliger Ausgang der zwei vorgeordneten Proportionalglieder mit der dem ohmschen Motorwiderstand entsprechenden Verstärkung r zugeführt ist. Die beiden ohmschen Proportionalglieder r gewichten, wie bereits weiter oben angesprochen, die durch das Kerbfilter 4a gelangten Strom-Vektorkomponenten i_{d_f}, i_{q_f} mit dem ohmschen Motorwiderstand.

Gemäß Figur 6 ist das Begrenzungsglied G eingangsseitig mit der Geschwindigkeits-Eingangsschnittstelle 10 und ausgangsseitig mit dem ersten Eingang eines Vorzeichen-Multipliziergliedes SM_{d} verbunden. Dessen zweiter Eingang kommuniziert mit dem Ausgang des Längsspannungs-Summiergliedes S_{d}, und der Ausgang des Vorzeichen-Multipliziergliedes SM_{d} steht mit der ersten Ausgangsschnittstelle 13 für die Längsvektorkomponente Δu_{d} der Spannungsabweichung in Verbindung. Dadurch lässt sich die Richtung des Läufers der elektrischen Maschine in die Berechnung des Lageermittlungsfehlers mit einbeziehen.

Gemäß Figur 6 fließt bei der Berechnung des Geschwindigkeitsermittlungsfehlers in Form der Quervektorkomponente Δu_{q} der Spannungsabweichung noch die EMK-Motorkonstante über ein mit entsprechender Verstärkung dimensioniertes Proportionalglied 16 mit ein. Das EMK-Proportionalglied ist dazu eingangsseitig mit der Drehzahl-Eingangsschnittstelle 10 verbunden. Ausgangsseitig ist das EMK-Proportionalglied 16 mit dem Minus-Eingang eines EMK-Summierglieds 17 verbunden, dessen Plus-Eingang mit dem Ausgang des Querspannungs-Summierglieds S_{q} kommuniziert. Der Ausgang des EMK-Summierglieds 17 geht direkt auf die zweite bzw. Querspannungsabweichungs-Ausgangsschnittstelle 14 des Modellierungsmoduls 9 zur Ausgabe des Geschwindigkeitsermittlungsfehlers an das nachgeordnete Fusionsmodul 6.

Gemäß Figur 6 umfasst das Maschinen- bzw. Motormodell 9 ferner Induktivitäts-Proportionalglieder A, D mit der Längs- bzw. Querinduktivität L_{d}, L_{q} als jeweiliger Verstärkungsfaktor. Wie zeichnerisch angedeutet, kann dem Induktivitätsproportionalglied A in Reihenschaltung noch ein weiteres Proportionalglied vor- oder nachgeschaltet sein, das einem gleich oder gleichartig dimensionierten Proportionalglied 20 entspricht, welches in dem dem Motormodell 9 zugeordneten Modell-Nachführregler (siehe unten) integriert ist und dort als "Lageregulierungsglied" interpretiert werden kann. Dem Ausgang des für die Längsvektorkomponente i_{d_f} des kerbgefilterten Statorstromes zuständigen Induktivitäts-Proportionalgliedes A ist ein Multiplizierglied B nachgeordnet, dessen zweiter Eingang mit dem Ausgang des bereits genannten, im wesentlichen Vorzeichenfunktion erfüllenden Begrenzungsglieds G verbunden ist, wodurch die Richtung der Läuferdrehung oder Läufer-Linearbewegung mit einbezogen wird. Der Ausgang des Multipliziergliedes B ist auf den Plus-Eingang eines Induktivitäts-Summiergliedes 26 gelegt, dessen zweiter Eingang, verknüpft mit negativem Vorzeichen, mit dem Ausgang des für die gefilterte Stromvektor-Querkomponente i_{q_f} zuständigen Induktivitäts-Proportionalgliedes D mit der Motor-Querinduktivität L_{q} als Proportionalverstärkung verbunden ist. Der sich am Ausgang des Induktivitäts-Summiergliedes 26 ergebende Differenzwert wird noch mit einem zugeordneten bzw. nachgeschalteten Proportionalglied C gewichtet, das entsprechend der maschinenspezifischen EMK (elektromotorische Kraft)-Konstante K_{E} und der Zeitkonstante T_{ω} dimensioniert und ausgangsseitig mit der dritten Ausgangsschnittstelle 27 für eine Induktivitäts-Spannungsabweichung Δu_{L} verbunden ist.

Gemäß Figur 6 umfasst das dem Motormodell 9 nachgeordnete Fusionsmodul 6 zwei simultan und voneinander unabhängig arbeitende Nachführregler, nämlich einen ersten Modell-Nachführregler 30 und einen zweiten Injektions-Nachführregler 31. Der Modell-Nachführregler 30 ist dem Motormodell 9, und der Injektions-Nachführregler 31 einem weiter unten beschriebenen Demodulationsmodul 32 zugeordnet.

Gemäß Figur 6 besitzt der Modell-Nachführregler 30 zwei Eingangsschnittstellen 18, 19 für die Längs- und Quervektorkomponenten Δu_{d}, Δu_{q} der im Modellierungsmodul 9 berechneten Spannungsabweichung. Die Längsvektorkomponente entspricht dem Lageermittlungsfehler, und die Quervektorkomponente dem Geschwindigkeitsermittlungsfehler. Die Eingangsschnittstelle 18 für die Längsspannungsabweichung Δu_{d} ist direkt dem Proportionalglied 20 zugeführt, welches mit der Proportionalverstärkung kp dimensioniert ist und ausgangsseitig mit dem Minus-Eingang eines ersten Nachführ-Summierglieds 21 verbunden ist. Dessen Plus-Eingang ist intern im Spannungs-Nachführ-Regler 30 direkt mit der Eingangsschnittstelle für die Querspannungsabweichung Δu_{q} verbunden. Das Summierergebnis wird ausgangsseitig einem ersten Integrationsglied 22 zugeführt, das erfindungsgemäß ohne Proportionalanteil ausgeführt und auf der Basis der EMK-Konstante K_{E} und einer Zeitkonstante T_{ω} bemessen ist. Der Ausgang des Integrationsgliedes 22, welches eine Integration der Differenz der Längs- und Querspannungsabweichung über die Zeit durchführt, ist dem Plus-Eingang eines zweiten Nachführ-Summiergliedes 29 zugeführt. Dessen zweiter Plus-Eingang ist intern im Modell-Nachführregler 30 mit dessen dritter Eingangsschnittstelle 28 verbunden. Letztere ist an die dritte Ausgangsschnittstelle 27 des Modellierungsmoduls 9 bzw. an den Ausgang des Proportionalgliedes C angelegt. Mithin wird der an der Ausgangsschnittstelle 27 des Modellierungsmoduls 9 ausgegebene Wert für die Induktivitäts-Spannungsabweichung Δu_{L} (welche die an sich von der Motorphysik geforderte interne Differenziation des Stromes im Motormodell ersetzt) der dritten Eingangsschnittstelle 28 des Modell-Nachführreglers 30 eingegeben. Intern wird die Spannungsabweichung Δu_{L} im Modell-Nachführregler 30 dem zweiten Plus-Eingang des zweiten Nachführ-Summierglieds 29 zugeführt. Dem anderen Plus-Eingang des zweiten Nachführ-Summierglieds ist der Ausgang des ersten Integrationsglieds 22 ebenfalls mit positiven Vorzeichen zugeordnet. Der Ausgang des zweiten Nachführ-Summierglieds führt zu einer Ausgangsschnittstelle 23 des Modell-Nachführreglers 30.

Gemäß Figur 6 liegen Eingangsschnittstellen 33, 34 des Demodulationsmoduls 32 parallel zum Kerbfilter 4a ebenfalls an den Ausgängen für rotorbezogene Vektorkomponenten i_{d}, i_{q} der zweiten Koordinaten-Transformationseinheit 4 an. Die Eingangsschnittstellen 33, 34 führen zu einem Bandpass-Filter 35, dessen Durchlassfrequenz einer Träger-Kreisfrequenz ω_{c} entspricht. Auf der Basis dieser Träger-Kreisfrequenz ω_{c} arbeitet beziehungsweise schwingt eine Injektionssignalquelle 36, über deren Ausgang 37 ein Testsignal mit der Amplitude u₀ (beispielsweise 100 Volt bei Trägerfrequenz von beispielsweise 1 kHz) in die Statorströme i₁, i₂ eingekoppelt wird. Die Einkopplung erfolgt über den Eingang eines Multipliziergliedes 38, dessen zweiter Multiplikator-Eingang mit einem hysteresebehafteten Schaltglied 39 verknüpft ist. Dieses wird abhängig von der ermittelten, gefilterten Geschwindigkeit ω_{ef} angesteuert. Fällt der Betrag der ermittelten Geschwindigkeit (ω_{ef} in ein zwischen den beiden Grenzfrequenzen ±ωₑ₀ gebildetes Fenster, gibt das Schaltglied den Wert eins an das Multiplizierglied 38 aus, und die Injektionssignalquelle 36 wird mit ihrem Ausgang 37 auf ein Reglerausgangs-Summierglied 40 durchgeschaltet. Dieses ist ausgangsseitig mit dem Längsspannungseingang der dritten Koordinaten-Transformationseinheit 7 verbunden, so dass über die beiden Transformationseinheiten 7, 8 ein zweckmäßig höherfrequentes Testsignal, welches die Träger-Kreisfrequenz ω_{c} enthält, über den Umrichter 2 in die Stromkreise des Stators 1 eingekoppelt und daraus über die beiden StromSensoren 41, 42 von der ersten Transformationseinheit 3 wieder abgegriffen werden kann. Liegt die gefilterte, ermittelte Antriebsgeschwindigkeit ω_{ef} außerhalb des genannten Geschwindigkeits-Fensters -ωₑ₀ - +ωₑ₀, wird durch Null-Ausgabe des Schaltglieds 39 die Verbindung des Injektionsausgangs 37 zur Regler-Summierstelle 40 unterbrochen, was bei höheren Antriebs-Geschwindigkeiten zur Vermeidung von Störungen aufgrund der höherfrequenten Träger-Kreisfrequenz ω_{c} zweckmäßig ist.

Da die Träger-Kreisfrequenz ω_{c} der Injektionssignalquelle 36 bekannt ist, lässt sich beim Demodulationsmodul 32 das Bandpassfilter 35 mit seinem Durchlass-Bereich auf diese Träger-Kreisfrequenz ω_{c} fokussieren. Infolgedessen stehen am Ausgang des Bandpass-Filters 35 Strom-Vektorkomponenten i_{d_c}, i_{q_c} zur Verfügung, die als Frequenzanteile im Wesentlichen nur die Träger-Kreisfrequenz ω_{c} entsprechend dem über die Reglerausgangs-Summierstelle 40 eingespeisten Testsignal enthalten. Die vom Bandpassfilter herausgefilterte Strom-Vektor-Querkomponente i_{qc} entspricht einem von der magnetischen Anisotropie abhängigen Korrektursignal, worin Information über die Läuferlage enthalten ist. Wegen weiterer Einzelheiten und theoretischer Hintergründe darf auf die bereits oben genannte Fundstelle von O.C. Ferreira und R. Kennel "Encoderless control of ...", insbesondere dortige Figuren 3 und 4 mit zugehöriger Beschreibung, verwiesen werden. Danach ist es vorteilhaft, ein alternierendes Testsignal mit der hohen Träger-Kreisfrequenz ω_{c} nur der Spannungsvektor-Längskomponente u_{d} aus dem entsprechenden Reglerausgang einzuprägen bzw. zu überlagern, um nachteilige Einflüsse auf die für die Drehmomenterzeugung relevanten Strom/Spannungsvektor-Querkomponenten i_{q}, u_{q}, zu vermeiden. Nach dem Herausfiltern der Trägerfrequenzstrom-Querkomponente i_{qc} im Demodulator 32 wird diese bezüglich der Trägerfrequenzstrom-Längskomponente i_{d_c} gleichgerichtet, was mittels eines Signumsgliedes 43 und eines Multipliziergliedes 44 erfolgt. Dazu wird die Längskomponente i_{d_c} des Trägerstromvektors aus dem Bandpass-Filter 35 dem Eingang des Signumsglieds 43 zugeführt. Dessen Ausgang ist mit einem Multiplikatoreingang verbunden. Der andere Multiplikatoreingang des Multiplizierglieds 44 ist mit dem Bandpass-Ausgang für die Querkomponente des Trägerstroms verbunden. Der Ausgang des Multiplizierglieds bildet gleichzeitig die Ausgangsschnittstelle 45 des Demodulators 32 für die demodulierten Hochfrequenzanteile i_{q_dem} des Querstroms iq.

In der eingangs genannten Fundstelle geben Ferreira und Kennel auf Seite 1966 in Verbindung mit Figur 6 den Hinweis, dass mit zunehmender mechanischer Last der Stator-Grundstrom zunimmt. Dadurch wird die Orientierung der Anisotropie, wie sie vom Injektions-Nachführregler 31 detektiert wird, verschoben, was in einen Winkelfehler resultiert, der durch eine Verschiebung des Sättigungsmaximums durch die Ständerstromvektor-Querkomponente verursacht wird, welche für die Erzeugung des Drehmoments relevant ist. Ein solcher fehlerhafter Versatz kann jedoch durch eine einfache lineare Adaption des Drehmoment erzeugenden Laststromes kompensiert werden. Dem dient das in Figur 6 gezeichnete Proportionalglied kₖₒᵣ, (Block H) mit Fehlerkorrekturfunktion. Das Korrektur-Proportionalglied H wird mit dem über das Kerbfilter von Anteilen der Träger-Kreisfrequenz ω_{c} gereinigten Stator-Querstrom i_{q_f} eingangsseitig gespeist, und am Ausgang des Proportionalgliedes H steht ein stromabhängiges Kompensationssignal zur Verfügung. Nun lässt sich der Einfluss eines lastabhängigen Fehlers kompensieren, indem das stromabhängige Kompensationssignal aus dem Proportionalglied H einem Minus-Eingang eines Eingangs-Summiergliedes 46 zugeführt wird, dessen Plus-Eingang mit der Ausgangsschnittstelle 45 des Demodulators 32 verbunden ist.

Für den Injektions-Nachführregler 31 bildet die EingangsSummierstelle 46 die erste Eingangsstation bzw. die Stromwert-Eingangsschnittstelle 47 für den demodulierten Querstrom i_{q_dem}, und 48 bezeichnet die Eingangsschnittstelle für das stromabhängige Kompensationssignal. Das Summierergebnis wird ausgangsseitig auf einen Proportional-Integralregler PI geführt. Dessen Ausgang bildet die Ausgangsschnittstelle 49 des Injektions-Nachführreglers 31.

Gemäß Figur 6 umfasst das Fusionsmodul 6 auch eine Kombinationseinrichtung 50, welche Eingangsschnittstellen für die Ausgangsschnittstellen 23, 49 der beiden Nachführregler 30, 31 aufweist. Die Ausgangsschnittstelle 23 des Modell-Nachführreglers 30 ist direkt einem Plus-Eingang einer Fusions-Summierstelle 51 zugeführt. Der Ausgang 49 des Injektions-Nachführreglers 31 ist mit dem zweiten Plus-Eingang der Fusions-Summierstelle 51 mittelbar über einen Gewichtungsmultiplizierer 52 gekoppelt. Der zweite Multiplikator-Eingang des Gewichtungsmultiplizierers 52 ist mit dem Ausgang eines Betragsbildungsgliedes F verbunden. Dieses besitzt gemäß gezeichnetem Ausführungsbeispiel eine geschwindigkeitsabhängige Dach-Kennlinie, die aus zwei Schrägabschnitten zusammengesetzt ist, welche mit betragsmäßiger Zunahme der Geschwindigkeit abfallen beziehungsweise jeweils eine fallende/negative Steigung aufweisen. Die beiden vorzugsweise zueinander symmetrischen Abschnitte treffen sich in dem Gewichtungswert "1" bei der Geschwindigkeit Null in einem Winkel. Ferner weist die Kennlinie des Betragsbildungsgliedes F zwei Nullstellen auf, die den beiden genannten GrenzGeschwindigkeiten ±ωₑ₀ entsprechen. Liegt der Betrag der ermittelten, gefilterten Geschwindigkeit ω_{ef} am Eingang des Betragsbildungsgliedes F außerhalb des sich von -ωₑ₀ bis +ωₑ₀ erstreckenden Geschwindigkeitsintervalls, wird der Ausgang 49 des Injektions-Nachführreglers 31 mit "Null" gewichtet bzw. ausgeblendet. Andernfalls wird der Injektions-Nachführregler-Ausgang 49 um so stärker gewichtet, je mehr sich die ermittelten Geschwindigkeitsbeträge |ω_{ef}| dem Wert Null annähern bzw. je kleiner der Antriebsgeschwindigkeits-Betrag wird. Dafür sorgt die geschwindigkeitsabhängige, vom Geschwindigkeitswert Null bidirektional jeweils abfallende Kennlinie des Betragsbildungsgliedes F. Dessen Eingang wird vom Ausgang der Fusions-Summierstelle 51 aus gespeist, vorzugsweise mittelbar über ein zwischengeschaltetes Tiefpass-Filter bzw. PT₁-Glied E, über welches aus der ermittelten Antriebs-Geschwindigkeit ωₑ am Ausgang der Fusions-Summierstelle 51 eine gefilterte, ermittelte Antriebs-Geschwindigkeit ω_{ef} erzeugt wird. Während bei Antriebs-Geschwindigkeits-Beträgen größer als der Grenz-Geschwindigkeitsbetrag ±ωₑ₀ der Injektions-Nachführregler 31 an seinem Ausgang 49 durch entsprechende Gewichtung ausgeblendet wird, bleibt bei kleinen Geschwindigkeiten innerhalb des genannten Fensters bzw. Intervalls von -ωₑ₀ bis +ωₑ₀ der Modell-Nachführregler 30 grundsätzlich weiter aktiv bzw. mit seinem Ausgang 23 zur Fusions-Summierstelle 51 durchgeschaltet. Dadurch liefert der Modell-Nachführregler auch bei kleinen Drehzahlen, wo an sich die Maschinen-Rück-EMK zur Auswertung und Ermittlung der Läuferlage zu schwach ist, weiterhin Beiträge, welche die bei niedrigen Geschwindigkeiten relevanten Werte aus dem Injektions-Nachführregler 31 stabilisieren und ergänzen. Die Genauigkeit ist so für Geschwindigkeitswerte innerhalb des genannten Geschwindigkeits-Intervalls -ωₑ₀ bis +ωₑ₀ erhöht.

Ferner wird intern in der Kombinationseinrichtung 50 die am Ausgang der Fusions-Summierstelle 51 zur Verfügung stehende, ermittelte Antriebs-Geschwindigkeit/Drehzahl noch einem zweiten Integrationsglied 24 zugeführt, welches daraus in an sich bekannter Weise die elektrische Antriebs-Lage bzw. Winkellage ϕₑ per Integration über die Zeit berechnet und über eine Lage-Ausgangsschnittstelle 53 an die zweite und dritte Koordinaten-Transformationseinheit 4, 7 ausgibt, wodurch die Transformation zwischen dem stator- und rotorbezogenen Koordinatensystemen gesteuert wird. Die nach dem Tiefpass oder PT₁-Glied E ermittelte, gefilterte Antriebs-Geschwindigkeit ω_{ef} steht am Ausgang 54 der Kombinationseinrichtung 50 bzw. des Fusionsmoduls 6 zur weiteren Rückkopplung an das Modellierungsmodul 9 (Geschwindigkeits-Eingangsschnittstellen 10) sowie an den Geschwindigkeitsregler 5 zur Verfügung.

### Bezugszeichenliste zu Figur 6

- 1: Stator
- 2: Umrichter
- 3: 3-zu-2 Phasen-Transformationseinheit
- 4: zweite Koordinaten-Transformationseinheit
- 4a: Kerbfilter
- i_{α}, i_{β}: Vektor-Stromkomponenten im statorbezogenen α, β-Koordinatensystem
- i_{d}, iq: Vektor-Stromkomponenten im rotorbezogenen d,q-Koordinatensystem
- i_{dsoll}, i_{qsoll}: Längs- bzw. Querstromsollwert
- I_{d}, I_{q}: Längs- und Querstromregler
- 5: Geschwindigkeitsregler
- 6: Fusionsmodul
- ωₛₒₗₗ: Drehzahlsollwert
- E: Tiefpass
- ω_{ef}: ermittelte, gefilterte Drezahl
- ϕₑ: ermittelte elektrische Winkellage
- 7: dritter Koordinaten-Transformationseinheit
- u_{d}, u_{q}: Längs- bzw. Querspannungsvorgaben
- u_{α}, u_{β}: Spannungsvorgabe im α, β-Koordinatensystem (statorbezogen)
- 8: 2-zu-3 Phasen-Transformationseinheit
- u₁, u₂, u₃: Spannungsvorgabe für drei Phasen
- 9: Motor-Modellierungsmodul
- 10: Drehzahl-Eingangsschnittstellen
- 11: Strom-Eingangsschnittstellen
- 12: Spannungs-Eingangsschnittstelle
- 13, 14: erste und zweite Ausgangsschnittstelle für intern berechnete Spannungsabweichungs-Vektorkomponenten
- K_{E}: EMK-Konstante
- G: Begrenzungsglied
- M_{d}, M_{q}: Multiplizierglieder
- S_{d}, S_{q}: Spannungssummierglieder
- VS_{d}, VS_{q}: Vorsummierglieder
- r: Proportionalglied für Motorwiderstand
- sL_{d}, sL_{q}: Längs-, Querstrom-Differenzierglied
- SM_{d}: Vorzeichen-Multiplizierglied
- Δu_{d}: Abweichungs-Längsvektorkomponente der Spannungsab-weichung
- Δu_{q}: Abweichungs-Quervektorkomponente der Spannungsab-weichung
- 16: EMK-Proportionalglied
- 17: EMK-Summierglied
- 18, 19: Eingangsschnittstellen für Längs- und Querspannungsabweichung
- 20: Proportionalglied
- 21: erstes Nachführ-Summierglied
- 22: erstes Integrationsglied
- 23: erste Nachführregler-Ausgangsschnittstelle
- 24: zweites Integrationsglied
- 25: zweite Nachführregler-Ausgangsschnittstelle
- A,D: Induktivitäts-Proportionalglieder
- B: Multiplizierglied
- 26: Induktivitäts-Summierglied
- C: Proportionalglied
- 27: dritte Ausgangsschnittstelle
- 28: dritte Eingangsschnittstelle
- 29: zweites Nachführ-Summierglied
- 30: Modell-Nachführregler
- 31: Injektions-Nachführregler
- 32: Demodulationsmodul
- 33, 34: Eingangsschnittstellen
- 35: Bandpass-Filter
- ω_{c}: Träger-Kreisfrequenz
- 36: Injektionssignalquelle
- 37: Ausgang
- 38: Multiplizierglied
- 39: Schaltglied
- 40: Reglerausgangs-Summierglied
- 41,42: Stromsensor
- 43: Signumsglied
- 44: Multiplizierglied
- 45: Ausgangsschnittstelle
- i_{q_dem}: demodulierte Hochfrequenzanteile des Querstroms iq
- H: Proportionalglied zur Lastfehler-Korrektur
- 46: Eingangssummierstelle
- 47,48: Eingangsschnittstellen
- PI: Proportional-Integralregler
- 49: Ausgangsschnittstelle
- 50: Kombinationseinrichtung
- 51: Fusions-Summierstelle
- 52: Gewichtungsmultiplizierer
- 53: Lage-Ausgangsschnittstelle
- 54: Geschwindigkeits-Ausgang der Kombinationseinrichtung beziehungsweise des Fusionsmoduls
- F: Betragsbildungsglied
- 55: Lastfehler-Korrektureingang

## Patentansprüche

1. Verfahren zur Beobachtung, Ermittlung und/oder Aufbereitung der Antriebs-Geschwindigkeit (ω) eines Permanentmagnet-Läufers einer elektrischen bürstenlosen Linear- oder Rotations-Maschine insbesondere für einen Antriebsregelkreis, unter Verwendung von ersten, eine Läufer-Geschwindigkeit darstellenden Eingangswerten (ωe), welche mit zweiten, eine gemessene Läufer-Beschleunigung darstellenden Eingangswerten (ε) zu einem resultierenden Geschwindigkeits-Ausgangswert (ω) verarbeitet werden, **dadurch gekennzeichnet, dass** der oder die ersten beziehungsweise Geschwindigkeits-Eingangswerte (ωe) aus einer programm- und/oder schaltungstechnischen Verarbeitung von an der Maschine abgegriffenen, zwei- oder mehrphasigen Spannungswerten und/oder Strommesswerten (i1,i2,..,in) gewonnen werden, mit:
- Verwendung eines für höhere Geschwindigkeiten geeigneten mathematischen Maschinenmodells (9), wobei aus dem Einfluss einer den Statorstrom (i1,i2,..,in) beeinflussenden Läufer-Rück-EMK auf die Läufer-Geschwindigkeit (ωef) und/oder -Lage (ϕₑ) geschlossen und ein entsprechender Modell-Geschwindigkeitswert (13,19,23) erzeugt wird,
- Verwendung eines für niedrigere Geschwindigkeiten bis einschliesslich Stillstand geeigneten Injektionsverfahrens (32), wobei stromführende Statorleiter mit einer Testsignalquelle (36,37) gekoppelt werden, und die resultierenden Statorströme (i1,i2,..,in) auf lageabhängige Anisotropien in der Magnetstruktur der elektrischen Maschine hin ausgewertet und/oder gefiltert werden, woraus auf die Läufer-Geschwindigkeit (ω_{ef}) und/oder - Lage (ϕₑ) geschlossen und ein entsprechender Injektions-Geschwindigkeitswert (45,49) erzeugt wird,
- und mit in einem Kombinationsglied (50,51) erfolgender, einander ergänzender Fusion der Modell- und Injektionsgeschwindigkeitswerte (23,49) zur ermittelten Antriebs-Geschwindigkeit (ωe,ω_{ef}),
- wobei korrespondierend mit der Zunahme der ermittelten Antriebs-Geschwindigkeit (ωe,ω_{ef}) der Einfluss oder die Beiträge der Injektions-Geschwindigkeitswerte (45,49) gegenüber denen der Modell-Geschwindigkeitswerte (13,19,23) abgeschwächt werden.

2. Verfahren nach Anspruch 1, **dadurch gekennzeichnet, dass** die zweiten beziehungsweise Beschleunigungs-Eingangswerte (ε) als Messwerte von einem Ferraris-Beschleunigungssensor (7) oder sonstigem Beschleunigungssensor abgeleitet werden, wobei der Beschleunigungs-Eingangswert (ε) und/oder ein entsprechende Messwert mit einem Normierungsfaktor (kε) gewichtet werden.

3. Verfahren nach einem der vorangehenden Ansprüche, **dadurch gekennzeichnet, dass** die Spannungswerte und/oder Strommesswerte (i1,i2,..,in) über ein mathematisches Maschinenmodell (9) zum jeweiligen Geschwindigkeits-Eingangswert (ωe) verarbeitet werden.

4. Verfahren nach Anspruch 3, **dadurch gekennzeichnet, dass** die Strommesswerte (i1,i2,..,in) in Abhängigkeit von einer ermittelten Lage (ϕₑₘ) des Läufers in ein läuferbezogenes d,q-Koordinatensystem zu einer Längsstrom-Vektorkomponente (i_{d}) und einer Querstrom-Vektorkomponente (iq) transformiert werden, und die Längs- und Quervektorkomponenten vom Strom (i_{d},i_{q}) und einer vorgegebenen Spannung (u_{d},u_{q}) zusammen mit dem ermittelten Geschwindigkeitseingangswert (ωₑₘ) als Eingangsvariable dem mathematischen Maschinenmodell (9) zugeführt werden, und das Maschinenmodell (9) eine erste Ausgangsvariable (Δu_{d}) und eine zweite Ausgangsvariable Δu_{q}) generiert, wobei die erste Ausgangsvariable (Δu_{d}) im d,q-Koordinatensystem der d- beziehungsweise Längsvektorkomponente sowie einem Lageermittlungsfehler und die zweite Ausgangsvariable (Δu_{q}) im d,q-Koordinatensystem der q-beziehungsweise Quervektorkomponente sowie einem Geschwindigkeitsermittlungsfehler entsprechen, und die beiden Ausgangsvariablen (Δu_{d}, Δu_{q}) einem Nachführregler (6) zur Ermittlung und Ausgabe der Lage (ϕₑₘ) und/oder des Geschwindigkeits-Eingangswerts (ωₑₘ) zugeführt werden, wobei aus dem Maschinenmodell eine dritte Ausgangsvariable (Δu_{L}) berechnet wird, indem
a) die Längs- und die Quervektorkomponenten vom Strom(id,iq) mit einer Längs- beziehungsweise Querinduktivität (L_{d},L_{q}) der Maschine jeweils gewichtet werden,
b) und die dritte Ausgangsvariable (Δu_{L}) aus der Differenz der beiden Wichtungsergebnisse gebildet wird,wobei die dritte Ausgangsvariable (Δu_{L}) dem Nachführregler (6) zur Verarbeitung für die Ermittlung der Lage (ϕₑₘ) und Geschwindigkeit (ωₑₘ) zugeführt wird.

5. Verfahren nach einem der vorangehenden Ansprüche, **dadurch gekennzeichnet, dass** in die Spannungen und/oder Ströme der elektrischen Maschine ein vorspezifiziertes Signalmuster injiziert wird, und die Spannungswerte und/oder Strommesswerte (i1,i2,..,in) auf lageabhängige Anisotropien der elektrischen Maschine hin gefiltert und/oder ausgewertet werden, woraus auf die Läufer-Geschwindigkeit geschlossen und ein entsprechender Geschwindigkeits-Eingangswert (ωe) erzeugt wird.

6. Verfahren nach einem der vorangehenden Ansprüche, **dadurch gekennzeichnet, dass**
a) die Geschwindigkeits-Ermittlung nahtlos über den gesamten Geschwindigkeitsbereich einschliesslich Stillstand des Läufers erfolgt, wobei
b) zur Abschwächung die Injektions-Geschwindigkeitswerte (45,49) mit Faktoren gewichtet (F) werden, deren Werte mit zunehmender Geschwindigkeit abnehmen,
c) und die gewichteten Injektions-Geschwindigkeitswerte mit den Modell-Geschwindigkeitswerten (13,19,23) in dem Kombinationsglied (50,51) fusioniert werden,
d) und das Kombinations-Ergebnis aus dem Kombinationsglied als die ermittelte Antriebsgeschwindigkeit (ωe,ω_{ef}) verwendet wird.

7. Anordnung zur Beobachtung, Ermittlung und/oder Aufbereitung der Antriebs-Geschwindigkeit (ω) eines Permanentmagnet-Läufers einer elektrischen bürstenlosen Linear- oder Rotations-Maschine insbesondere für einen Antriebsregelkreis mit einem Geschwindigkeitsbeobachter (1), der einen ersten Eingang (5) für Geschwindigkeitswerte (ωe) und einen zweiten Eingang (6) für Beschleunigungswerte (ε) aufweist, wobei der zweite beziehungsweise Beschleunigungswerte-Eingang (6) mit einem Ferraris-Beschleunigungssensor (7) oder sonstigem Beschleunigungssensor verbunden oder verbindbar ist, **dadurch gekennzeichnet, dass** der erste beziehungsweise Geschwindigkeitswerte-Eingang mit einer Einrichtung (4) zur Ermittlung der Geschwindigkeit (ωe) des Permanentmagnet-Läufers verbunden oder verbindbar ist, welche Einrichtung mit Eingängen zum Messen, Abgreifen und/oder Erfassen von zwei- oder mehrphasigen Spannungswerten und/oder Strommesswerten (i1,i2,..,in) der Maschine versehen und programm- und/oder schaltungstechnisch dazu eingerichtet und/oder ausgebildet ist, an ihrem Ausgang anhand der Spannungswerten und/oder Strommesswerte (i1,i2,..,in) die Geschwindigkeitswerte (ωe) für den ersten Eingang (5) des Geschwindigkeitsbeobachters (1) zu erzeugen und die Einrichtung zur Ermittlung der Antriebs-Geschwindigkeit (ωe,ωef) und/oder Lage (ϕe) eines Permanentmagnet-Läufers einer elektrischen bürstenlosen Linear- oder Rotations-Maschine zum nahtlosen Arbeiten über den gesamten Geschwindigkeitsbereich einschliesslich Stillstand des Läufers eingerichtet und/oder ausgebildet ist, mit folgenden Funktionskomponenten:
- mit einem schaltungs- und/oder programmtechnisch realisierten Maschinen-Modellierungsmodul (9), das aufweist:
* Eingangs-Schnittstellen (10,11,12; id,iq;ud,uq) für einen Strom (i1,i2,..,in) des Stators beziehungsweise Ständers (1) der elektrischen Maschine und/oder einer vorgegebenen Spannung und/oder für die ermittelte Geschwindigkeit (ωef),
* und Ausgangs-Schnittstellen (13,14) für Spannungs-Werte (Δu_{d}, Δu_{q}) entsprechend einer den Statorstrom (i1;i2) beeinflussenden Läufer-Rück-EMK,
- mit einer Testsignal- beziehungsweise Injektionsquelle (36,37), die mit den Stromleitern des Stators (1) zur Einprägung eines Testsignals mit einer vorbestimmten Trägerfrequenz (ωc) gekoppelt ist,
- mit einem schaltungs- und/oder programmtechnisch realisierten Demodulationsmodul (32), das eingangsseitig mit Stromwerten (i_{d},i_{q}) für den Statorstrom gekoppelt ist, ein auf die Testsignal-Trägerfrequenz (ωc) ausgerichtetes Bandpass-Filter (35) aufweist, dem eingangsseitig die Strom-Werte (i_{d},i_{q}) zugeführt sind, und wobei der Ausgang des Bandpass-Filters (35) einer Ausgangsschnittstelle (45) des Demodulationsmoduls für einen Demodulations-Stromwert (i_{q_dem)} zugeführt ist,
- und mit einem schaltungs- und/oder programmtechnisch realisierten Fusionsmodul (6), das eingangsseitig mit den Ausgangsschnittstellen (13,14,27;45) des Modellierungs- und Demodulationsmoduls (9;32) gekoppelt ist und ausgangsseitig eine Ausgabeschnittstelle (54) für die ermittelte Antriebs-Geschwindigkeit (ω_{ef}) aufweist.

8. Anordnung nach Anspruch 7, **dadurch gekennzeichnet, dass** der Beschleunigungswerte-Eingang (6) des Geschwindigkeitsbeobachters (1) mit einem Proportionalglied (8) zur Gewichtung mit einem Normierungsfaktor (kε) realisiert ist.

9. Anordnung nach Anspruch 7 oder 8, **dadurch gekennzeichnet, dass** die Ermittlungseinrichtung mit folgenden Funktionskomponenten realisiert ist:
a) mit einem schaltungs- und/oder programmtechnisch realisierten Maschinen-Modellierungsmodul (9), das aufweist:
aa) Eingangs-Schnittstellen (10,11,12) für in ein läuferbezogenes d,q-Koordinatensystem transformierte Maschinen-Längs- und - Quervektorkomponenten (i_{d},i_{q};u_{d},u_{q}) vom Stator-Strom (i1,i2,..,in) und einer vorgegebenen Spannung sowie für die ermittelte Geschwindigkeit (ωₑₘ),
ab) und wenigstens zwei Ausgangs-Schnittstellen (13,14) für in das d,q-Koordinatensystem transformierte Vektorkomponenten (Δu_{d}, Δu_{q}) einer intern berechneten Spannungsabweichung,
b) mit einem schaltungs- und/oder programmtechnisch zur Ausgabe der Lage und/oder Geschwindigkeit realisierten Nachführregler (6), der verbunden ist:
ba) eingangsseitig mit den wenigstens beiden Ausgangschnittstellen (13,14) des Modellierungsmoduls (9)
bb) und ausgangsseitig mit der Geschwindigkeits-Eingangs-Schnittstelle (10) des Modellierungsmoduls (9), wobei das Maschinen-Modellierungsmodul (9) wenigstens noch eine dritte Ausgangsschnittstelle (27) für eine Induktivitäts-Spannungsabweichung Δu_{L}) aufweist und dazu ausgebildet ist, mittels Proportionalglieder (A,D) die Eingangswerte für die Strom-Längs- und Quervektorkomponenten (id,iq) mit Festwerten für eine Längs- beziehungsweise Querinduktivität (L_{d},L_{q}) des Stators (1) oder der Maschine zu bewerten, mittels eines Induktivitäts-Summierglieds (26) die Differenz aus den induktiv bewerteten Eingangswerten zu bilden und diese über die dritte Ausgangsschnittstelle (27) auszugeben, mit der der Nachführregler (6) eingangsseitig zum Empfang der Differenz verbunden und dazu ausgebildet ist, die Differenz zur Ermittlung der Geschwindigkeit (ωem) zu verarbeiten und letztere an die Geschwindigkeits-Eingangs-Schnittstelle (10) des Modellierungsmoduls (9) auszugeben.

10. Anordnung nach einem der Ansprüche 7 bis 9, **dadurch gekennzeichnet, dass** die Einrichtung zur Ermittlung der Antriebs-Geschwindigkeit (ωe,ω_{ef}) und/oder Lage (ϕe) eines Permanentmagnet-Läufers einer elektrischen bürstenlosen Linear- oder Rotations-Maschine zum nahtlosen Arbeiten über den gesamten Geschwindigkeitsbereich einschliesslich Stillstand des Läufers eingerichtet und/oder ausgebildet ist, wobei
a) das Fusionsmodul (6) einen ersten, mit den Ausgangsschnittstellen des Modellierungsmoduls (13,14,27) gekoppelten Modell-Nachführregler (30) und einen zweiten, mit der Strom-Ausgangsschnittstelle (45) des Demodulationsmoduls (32) gekoppelten Injektions-Nachführregler (31) aufweist, welche beiden jeweils Ausgangsschnittstellen (23;49) wenigstens für Modell- beziehungsweise Injektions-Geschwindigkeitswerte aufweisen,
b) die Nachführregler-Ausgangsschnittstelle (49) für die Injektions-Geschwindigkeitswerte zu deren Gewichtung mit einem Ausgang eines Betragsbildungsglieds (F) gekoppelt ist, das mit einer Übertragungsfunktion versehen ist, die eine über ein betragsmässig steigendes Eingangssignal (ω_{ef}) beziehungsweise Argument fallende Kurve aufweist,
c) der Eingang des Betragsbildungsglieds (F) mit einer Ausgabeschnittstelle des Fusionsmoduls (6) oder einer Fusionssummierstelle (51) für die ermittelte Antriebs-Geschwindigkeit (ω_{ef}) verbunden ist,
d) der vom Betragsbildungsglied (F) beeinflusste oder gewichtete Ausgang (49) für Injektions-Geschwindigkeitswerte und die Nachführregler-Ausgangsschnittstelle (23) für die Modell-Geschwindigkeitswerte gemeinsam einem Kombinationsglied oder der Fusionssummierstelle (51) zugeführt sind;
e) der Ausgang des Kombinationsglieds oder der Fusionssummierstelle (51) unmittelbar oder mittelbar mit einer Ausgabesschnittstelle (54) des Fusionsmoduls (6) für die ermittelte Antriebs-Geschwindigkeit (ω_{ef}) verbunden ist.

11. Anordnung nach Anspruch 10, **dadurch gekennzeichnet, dass** das Fusionsmodul (6) schaltungs- und/oder programmtechnisch realisiert ist mit eingangsseitigen Schnittstellen (18,19,28) für Spannungs- und Stromwerte (Δu_{d}, Δu_{q}, Δu_{L},i_{q_dem}), mit einem Nachführ-Reglerwerk (30,31), um aus den Spannungs- und Stromwerten eine elektrische Antriebslage (ϕe) und/oder - geschwindigkeit (ω_{ef}) einer elektrischen Maschine zu ermitteln, und mit Ausgangsschnittstellen (54) für die ermittelte Antriebslage (ϕe) und/oder - geschwindigkeit (ω_{ef}), wobei das Nachführ-Reglerwerk (30,31) umfasst:
a) wenigstens zwei voneinander unabhängig arbeitende Modell- und Injektions-Nachführregler (30,31), von denen der eine Modell-Nachführregler (30) den Spannungswerten (Δu_{d}, Δu_{q}, Δu_{L})und der andere Injektions-Nachführregler (31) den Stromwerten (i_{q_dem}) zugeordnet ist, und beide dazu ausgebildet sind, aus den Spannungs- beziehungsweise Stromwerten (Δu_{d}, Δu_{q}, Δu_{L},i_{q_dem}) Geschwindigkeitswerte (ω_{ef},ωe) zu generieren

12. Anordnung nach Anspruch 11, **dadurch gekennzeichnet, dass** das Fusionsmodul (6) weiter umfasst:
b) ein Betragsbildungsglied (F) mit einer über sein betragsmässig zunehmendes Eingangssignal (ω_{ef}) fallenden Übertragungsfunktion, welches Betragsbildungsglied (F) eingangsseitig mit der Ausgangsschnittstelle (54) für die ermittelte Antriebsgeschwindigkeit (ω_{ef}) verbunden und ausgangsseitig mit dem Ausgang (49) des den Stromwerten (i_{q_dem)} zugeordneten Injektions-Nachführreglers (31) zur Gewichtung von dessen generierten Geschwindigkeitswerten (49) gekoppelt ist,
c) ein Kombinationsglied (51), dem der mit dem Betragsbildungsglied (F) gekoppelte und/oder gewichtete Injektions-Nachführregler-Ausgang (49) und der Ausgang des den Spannungswerten (Δu_{d}, Δu_{q}, Δu_{L}) zugeordneten Modell-Nachführreglers (30) gemeinsam zugeführt sind,
d) und eine Verbindung des Ausgangs des Kombinationsglieds (51) unmittelbar oder mittelbar mit der Ausgabesschnittstelle (54) des Fusionsmoduls (6) für die ermittelte Antriebs-Geschwindigkeit (ω_{ef}).

13. Anordnung nach einem der Ansprüche 7 bis 12, **dadurch gekennzeichnet, dass** das Maschinen-Modellierungsmodul (9) folgendes umfasst:
a) Eingangs-Schnittstellen (11) für in ein Läuferbezogenes d,q-Koordinatensystem transformierte Maschinen-Längs- und - Quervektorkomponenten (i_{d},i_{q} u_{d},u_{q};) vom Strom und einer vorgegebenen Spannung sowie für eine extern ermittelte Maschinen-Geschwindigkeit (ω_{ef}),
b) und mit mindestens zwei Ausgangs-Schnittstellen (13,14) für in das d,q-Koordinatensystem transformierte Längs- und Quervektorkomponenten (Δu_{d}, Δu_{q}) einer intern berechneten Spannungsabweichung,
c) und mit mehreren Proportionalgliedern (r,A,D) zur Gewichtung der Strom-Vektorkomponenten (i_{d},i_{q}) mit einem ohmschen Stator- oder Maschinenwiderstand (r) und einer oder mehreren Stator- oder Maschineninduktivitäten (L_{d},L_{q}),
d) ein Begrenzerglied (G), das an seinem Eingang mit der Eingangs-Schnittstelle (10) für die extern ermittelte Maschinen-Geschwindigkeit (ω_{ef}) verbunden und ausgangsseitig über ein Multiplizierglied (B) mit dem Ausgang eines Proportionalgliedes (A,D) verknüpft ist, das die Strom-Längs- oder Quervektorkomponente (i_{d}, i_{q}) mit der Längs- oder Querinduktivität (L_{d},L_{q}) gewichtet.

14. Anordnung nach einem der vorangehenden Ansprüche, **dadurch**
**gekennzeichnet, dass** der Geschwindigkeitsbeobachter (1) einen Ausgang für ermittelte Geschwindigkeits-Schätzwerte (ω) aufweist, der mit einem Geschwindigkeitsregler (5) des Antriebregelkreises verbunden ist.

## Claims

1. A method for observing, determining and/or processing the drive speed (ω) of a permanent magnet rotor of an electrical brushless linear or rotation machine, in particular for a drive control circuit, using first input values (ωe) representing a rotor speed which are processed with second input values (ε) representing a measured rotor acceleration to form a resulting speed output value (ω), **characterised in that** the first speed input value or values (ωe) is/are obtained from programme- and/or circuit-technical processing of two- or multi-phase voltage values and/or current measurements (i1, i2, ..., in) tapped on the machine, comprising:
- use of a mathematical machine model (9) suitable for higher speeds, the rotor speed (ωef) and/or position (ϕe) being concluded from the effect of a rotor back EMF affecting the stator current (i1, i2, in), and a corresponding model speed value (13, 19, 23) being generated,
- use of an injection method (32) suitable for lower speeds including shutdown, the current-conveying stator conductor being coupled to a test signal source (36, 37), and the resulting stator currents (i1, i2, ..., in) being evaluated and/or filtered over position-dependent anisotropies in the magnet structure of the electrical machine, from which the rotor speed (ω_{ef}) and/or position (ϕₑ) is concluded and a corresponding injection speed value (45, 49) is generated,
- and with mutually supplementing fusion of the model and injection speed values (23, 49) to form the determined drive speed (ωe, ω_{ef}) taking place in a combination member (50, 51),
- correspondingly to the increase in drive speed (ωe, ω_{ef}) determined the effect or the contributions of the injection speed values (45, 49) in relation to those of the model speed values (13, 19, 23) being diminished.

2. The method according to Claim 1, **characterised in that** the second or acceleration input values (ε) are derived as measurement values from a Ferraris acceleration sensor (7) or some other acceleration sensor, the acceleration input value (ε) and/or a corresponding measurement value being weighted with a standardisation factor (kε).

3. The method according to any of the preceding claims, **characterised in that** the voltage values and/or current measurements (i1, i2, ..., in) are processed by means of a mathematical machine model (9) to form the respective speed input value (ωe).

4. The method according to Claim 3, **characterised in that** the current measurements (i1, i2, ..., in) are transformed dependently upon a determined position (ϕₑₘ) of the rotor into a rotor-related d,q coordinate system for a longitudinal current vector component (i_{d}) and a cross current vector component (iq), and the longitudinal and cross vector components of the current (i_{d}, iq) and a pre-specified voltage (u_{d}, u_{q}) are delivered together with the determined speed input value (ωₑₘ) as an input variable to the mathematical machine model (9), and the machine model (9) generates a first output variable (Δu_{d}) and a second output variable Δu_{q}), the first output variable (Δu_{d}) in the d,q coordinate system corresponding to the d- or longitudinal vector component and and to a position determination error, and the second output variable (Δu_{q}) in the d,q coordinate system corresponding to the q- or cross vector component and a speed determining error, and the two output variables (Δu_{d}, Δu_{q}) being delivered to a compensating controller (6) in order to determine and output the position (ϕₑₘ) and/or the speed input value (ωₑₘ), a third output variable (Δu_{L}) being calculated from the machine model, by
a) the longitudinal and cross vector components of the current (id, iq) being weighted respectively with a longitudinal or cross inductance (L_{d}, Lq) of the machine,
b) and the third output variable (Δu_{L}) being formed from the difference between the two weighting results, the third output variable (Δu_{L}) being delivered to the compensating controller (6) for processing in order to determine the position (ϕₑₘ) and speed (ωₑₘ).

5. The method according to any of the preceding claims, **characterised in that** a pre-specified signal pattern is injected into the voltages and/or currents of the electrical machine, and the voltage values and/or current measurements (i1, i2, ..., in) are filtered and/or evaluated over position-dependent anisotropies of the electrical machine, from which one concludes the rotor speed and a corresponding speed input value (ωe) is generated.

6. The method according to any of the preceding claims, **characterised in that**
a) the speed is determined seamlessly over the whole speed range including shutdown of the rotor,
b) in order to diminish them, the injection speed values (45, 49) are weighted with factors (F), the values of which decrease with increasing speed,
c) and the weighted injection speed values are merged with the model speed values (13, 19, 23) in the combination member (50, 51),
d) and the combination result from the combination member is used as the determined drive speed (ωe, ω_{ef}).

7. An assembly for observing, determining and/or processing the drive speed (ω) of a permanent magnet rotor of an electrical brushless linear or rotation machine, in particular for a drive control circuit, comprising a speed observer (1) that has a first input (5) for speed values (ωe) and a second input (6) for acceleration values (ε), the second or acceleration values input (6) being connected or connectable to a Ferraris acceleration sensor (7) or some other acceleration sensor, **characterised in that** the first or speed values input is connected or connectable to a device (4) for determining the speed (ωe) of the permanent magnet rotor, said device being provided with inputs for measuring, tapping and/or recording two- or multi-phase voltage values and/or current measurements (i1, i2, ..., in) of the machine, and being set up and/or formed programme- and/or circuit-technically in order to generate at its output, by means of the voltage values and/or current measurements (i1, i2, ..., in), the speed values (ωe) for the first input (5) of the speed observer (1), and that the device is set up and/or designed to determine the drive speed (ωe, ωef) and/or position (ϕe) of a permanent magnet rotor of an electrical brushless linear or rotation machine for seamlessly working over the whole speed range including shutdown of the rotor, comprising the following functional components:
- comprising a circuit- and/or programme-technically produced machine modelling module (9) that has:
* input interfaces (10, 11, 12; id, iq; ud, uq) for a current (i1, i2, ..., in) of the stator or stand (1) of the electrical machine and/or a pre-specified voltage and/or for the determined speed (ωef),
* and output interfaces (13, 14) for voltage values (Δu_{d}, Δu_{q}) corresponding to a rotor back EMF affecting the stator current (i1; i2),
- comprising a test signal or injection source (36, 37) that is coupled to the current conductors of the stator (1) in order to imprint a test signal with a predetermined carrier frequency (ωc),
- comprising a circuit- and/or programme-technically produced demodulation module (32) that is coupled on the input side to current values (i_{d}, i_{q}) for the stator current, has a bandpass filter (35) aligned to the test signal carrier frequency (ωc) to which the current values (i_{d}, i_{q}) are delivered on the input side, and the output of the bandpass filter (35) being delivered to an output interface (45) of the demodulation module for a demodulation current value (i_{q_dem}),
- and comprising a circuit- and/or programme-technically produced fusion module (6) that is coupled on the input side to the output interfaces (13, 14, 27; 45) of the modelling and demodulation module (9; 32) and on the output side has an output interface (54) for the determined drive speed (ωef).

8. The assembly according to Claim 7, **characterised in that** the acceleration values input (6) of the speed observer (1) is produced with a proportional member (8) in order to weight with a standardisation factor (kε).

9. The assembly according to Claim 7 or 8, **characterised in that** the determining device is produced with the following functional components:
a) with a circuit- or programme-technically produced machine modelling module (9) that has:
aa) input interfaces (10, 11, 12) for machine longitudinal and cross vector components (i_{d}, iq; U_{d}, U_{q}) of the stator current (i1, i2, ..., in) and of a pre-specified voltage transformed into a rotor-related d,q coordinate system and for the determined speed (ωₑₘ),
ab) and at least two output interfaces (13, 14) for vector components (Δu_{d}, Δu_{q}) of an internally calculated voltage deviation transformed into the d,q coordinate system,
b) with a circuit- and/or programme-technically produced compensating controller (6) for outputting the position and/or speed, which is connected:
ba) on the input side to the at least two output interfaces (13, 14) of the modelling module (9),
bb) and on the output side to the speed input interface (10) of the modelling module (9), the machine modelling module (9) having at least a third output interface (27) for an inductance voltage deviation (Δu_{L}) and being designed to evaluate the input values for the current longitudinal and cross vector components (id, iq) with fixed values for a longitudinal or cross inductance (L_{d}, L_{q}) of the stator (1) or the machine by means of proportional members (A, D), to form the difference from the inductively evaluated input values by means of an inductance adding member (26), and to output the latter via the third output interface (27) to which the compensating controller (6) is connected on the input side in order to receive the difference, and is designed to process the difference in order to determine the speed (ωem) and to output the latter to the speed input interface (10) of the modelling module (9).

10. The assembly according to any of Claims 7 to 9, **characterised in that** the device for determining the drive speed (ωe, ω_{ef}) and/or position (ϕpe) of a permanent magnet rotor of an electrical brushless linear or rotation machine is set up and/or designed to seamlessly work over the whole speed range including shutdown of the rotor,
a) the fusion module (6) having a first model compensating controller (30) coupled to the output interfaces of the modelling module (13, 14, 27), and a second injection compensating controller (31) coupled to the current output interface (45) of the demodulation module (32), which both respectively have output interfaces (23; 49) at least for model or injection speed values,
b) the compensating controller output interface (49) for the injection speed values being coupled, for weighting of the latter, to an output of an amount forming member (F) that is provided with a transfer function which has a curve falling over an input signal (ω_{ef}) rising according to the amount or argument,
c) the input of the amount forming member (F) being connected to an output interface of the fusion module (6) or a fusion adding point (51) for the determined drive speed (ω_{ef}),
d) the output (49) for injection speed values affected or weighted by the amount forming member (F) and the compensating control output interface (23) for the model speed values being delivered together to a combination member or to the fusion adding point (51);
e) the output of the combination member or the fusion adding point (51) being connected directly or indirectly to an output interface (54) of the fusion module (6) for the determined drive speed (ω_{ef}).

11. The assembly according to Claim 10, **characterised in that** the fusion module (6) is produced circuit- and/or programme-technically with interfaces (18, 19, 28) on the input side for voltage and current values (Δu_{d}, Δu_{q}, Δu_{L,} i_{q}__{dem}), with a compensating rule system (30, 31) in order to determine an electrical drive position (ϕe) and/or speed (ω_{ef}) of an electrical machine from the voltage and current values, and with output interfaces (54) for the determined drive position (ϕe) and/or speed (ω_{ef}), the compensating rule system (30, 31) comprising:
a) at least two model and injection compensating controllers (30, 31) working independently of one another, of which the one model compensating controller (30) is assigned to the voltage values (Δu_{d}, Δu_{q}, Δu_{L}) and the other injection compensating controller (31) is assigned to the current values (i_{q}__{dem}), and both are designed to generate speed values (ω_{ef}, we) from the voltage or current values (Δu_{d}, Δu_{q}, Δu_{L}, i_{q}__{dem}).

12. The assembly according to Claim 11, **characterised in that** the fusion module (6) further comprises:
b) an amount forming member (F) with a transfer function falling over its input signal (ω_{ef}) increasing according to the amount, said amount forming member (F) being connected on the input side to the output interface (54) for the determined drive speed (ω_{ef}) and coupled on the output side to the output (49) of the injection compensating controller (31) assigned to the current values (i_{q}__{dem}) in order to weight speed values (49) generated by the latter,
c) a combination member (51) to which the injection compensating controller output (49) coupled to the amount forming member (F) and/or weighted and the output of the model compensating controller (30) assigned to the voltage values (Δu_{d}, Δu_{q}, Δu_{L}) are delivered together,
d) and a connection of the output of the combination member (51) directly or indirectly to the output interface (54) of the fusion module (6) for the determined drive speed (ω_{ef}).

13. The assembly according to any of Claims 7 to 12, **characterised in that** the machine modelling module (9) comprises the following:
a) input interfaces (11) for machine longitudinal and cross vector components (i_{d}, i_{q}, u_{d}, u_{q};) of the current and a pre-specified voltage transformed into a rotor-related d,q coordinate system and for an externally determined machine speed (ω_{ef}),
b) and comprising at least two output interfaces (13, 14) for longitudinal and cross vector components (Δu_{d}, Δu_{q}) of an internally calculated voltage deviation transformed into the d,q coordinate system,
c) and comprising a number of proportional members (r, A, D) for weighting the current vector components (i_{d}, i_{q}) with an ohmic stator or machine resistance (r) and one or more stator or machine inductances (L_{d}, L_{q}),
d) a delimiter member (G) that is connected at its input to the input interface (10) for the externally determined machine speed (ω_{ef}) and is linked on the output side via a multiplier member (B) to the output of a proportional member (A, D) that weights the current longitudinal or cross vector component (i_{d}, i_{q}) with the longitudinal or cross inductance (L_{d}, L_{q}).

14. The assembly according to any of the preceding claims, **characterised in that** the speed observer (1) has an output for determined estimated speed values (ω) that is connected to a speed controller (5) of the drive control circuit.

## Revendications

1. Procédé pour observer, déterminer et/ou délivrer la vitesse d'entraînement (ω) d'un rotor à aimant permanent d'un moteur électrique linéaire ou rotatif sans balais, en particulier pour un circuit régulateur d'entraînement, en utilisant des premières valeurs d'entrée (ωe) représentant une vitesse du rotor, qui sont traitées avec des secondes valeurs d'entrée (ε) représentant une accélération mesurée du rotor pour en tirer une valeur de sortie de vitesse (ω) résultante, **caractérisé en ce que** la ou les premières valeurs d'entrée de vitesse (ωe) est ou sont obtenues à partir d'un traitement réalisé par des techniques de programmation et/ou de commutation de valeurs de tension à deux ou plusieurs phases et/ou de valeurs de mesure de courant (il, i2, ..., in) prélevées sur le moteur, comprenant :
- l'utilisation d'un modèle de moteur mathématique (9) convenant à des vitesses élevées, dans lequel le procédé est arrêté en raison de l'influence d'une force contre-électromotrice rotorique influençant le courant statorique (il, i2, ..., in) sur la vitesse (ω_{ef}) et/ou la position (ϕₑ) du rotor et une valeur de vitesse de modèle correspondante (13, 19, 23) est générée,
- l'utilisation d'un procédé d'injection (32) approprié pour de faibles vitesses allant jusqu' à l' arrêt inclus, dans lequel des conducteurs statoriques conducteurs de courant sont couplés à une source de signal de test (36, 37) et les courants statoriques résultants (il, i2, ..., in) sont exploités et/ou filtrés à des anisotropies dépendant de la position dans la structure magnétique du moteur électrique, ce qui permet de révéler la vitesse *(ω_{ef})* et/ou la position (ϕₑ) du rotor et de générer une valeur de vitesse d'injection (45, 49) correspondante,
- et une fusion s'effectuant dans un organe de combinaison (50, 51)etsecomplétantmutuellementdes valeurs de vitesses de modèle et d'injection (23, 49) pour obtenir la vitesse d'entraînement déterminée (ωe, ω_{ef})
- dans lequel, en correspondance avec l'augmentation de la vitesse d'entraînement déterminée (ωe, ω_{ef}), l'influence ou les contributions des valeurs de vitesse d'injection (45, 49) sont atténuées vis-à-vis de celles des valeurs de vitesse de modèle (13, 19, 23).

2. Procédé selon la revendication 1, **caractérisé en ce que** les secondes valeurs ou valeurs d'entrée d'accélération (ε) sont tirées, comme valeurs de mesure, d'un capteur d'accélération de type Ferraris (7) ou d'un autre capteur d'accélération, la valeur d'entrée d'accélération (ε) et/ou une valeur de mesure correspondante étant pondérée(s) par un facteur de normalisation (kε).

3. Procédé selon l'une quelconque des revendications précédentes, **caractérisé en ce que** les valeurs de tension et/ou les valeurs de mesure de courant (il, i2, ..., in) sont traitées via un modèle de moteur mathématique (9) pour obtenir la valeur d'entrée de vitesse (ωe) respective.

4. Procédé selon la revendication 3, **caractérisé en ce que** les valeurs de mesure de courant (il, i2, ..., in) sont transformées en fonction d'une position déterminée (ϕₑₘ) du rotor dans un système de coordonnées d, q rapporté au rotor en une composante vectorielle de courant longitudinale (i_{d}) et en une composante vectorielle de courant transversale (i_{q}), **en ce que** les composantes vectorielles longitudinale et transversale du courant (i_{d},i_{q}) et d'une tension prédéfinie (u_{d}, u_{q}) sont acheminées, conjointement avec la valeur d'entrée de vitesse déterminée (ωₑₘ), comme variable d'entrée, au modèle de moteur mathématique (9), **en ce que** le modèle de moteur (9) génère une première variable de sortie (Δu_{d}) et une deuxième variable de sortie (Δu_{q}) , la première variable de sortie (Δu_{d}) correspondant, dans le système de coordonnées d,q, à la composante d ou composante vectorielle longitudinale, ainsi qu'à une erreur de détermination de position, et la deuxième variable de sortie (Δu_{q}) correspondant, dans le système de coordonnées d,q, à la composante q ou composante vectorielle transversale, ainsi qu'à une erreur de détermination de vitesse, et **en ce que** les deux variables de sortie (Δu_{d}, Δu_{q}) sont acheminées à un régulateur de suivi (6) pour déterminer et délivrer la position (ϕₑₘ) et/ou la valeur d'entrée de vitesse (ωₑₘ) , dans lequel à partir du modèle de moteur, on calcule une troisième variable de sortie (Δu_{L})
a) en pondérant respectivement les composantes vectorielles longitudinale et transversale du courant (i_{d}, i_{q}) avec une inductance longitudinale ou transversale (L_{d}, L_{q}) du moteur,
b) et en formant la troisième variable de sortie (Δu_{L}) à partir de la différence des deux résultats de pondération, la troisième variable de sortie (Δu_{L}) étant acheminée au régulateur de suivi (6) à des fins de traitement pour déterminer la position (ϕₑₘ) et la vitesse (ωₑₘ).

5. Procédé selon l'une quelconque des revendications précédentes, **caractérisé en ce qu'**un type de signal préalablement spécifié est injecté dans les tensions et/ou les courants du moteur électrique et les valeurs de tension et/ou les valeurs de mesure de courant (il, i2, ..., in) sont exploitées et/ou filtrées à des anisotropies dépendant de la position dumoteur électrique, ce qui permet de révéler la vitesse du rotor et de générer une valeur d'entrée de vitesse (ωe) correspondante.

6. Procédé selon l'une quelconque des revendications précédentes, **caractérisé en ce que**
a) la détermination de la vitesse se fait sans interruption sur toute la plage de vitesses, y compris l'arrêt du rotor, dans lequel :
b) pour l'atténuation, les valeurs de vitesse d'injection (45, 49) sont pondérées (F) par des facteurs dont les valeurs diminuent à mesure que la vitesse augmente,
c) et les valeurs de vitesse d'injection pondérées sont fusionnées avec les valeurs de vitesse de modèle (13, 19, 23) dans l'organe de combinaison (50, 51),
d) et le résultat de la combinaison issu de l'organe de combinaison est utilisé comme vitesse d'entraînement déterminée (ωe, ωₑₘ).

7. Aménagement pour observer, déterminer et/ou délivrer la vitesse d'entraînement (ω) d'un rotor à aimant permanent d'un moteur électrique linéaire ou rotatif sans balais, en particulier pour un circuit régulateur d' entraînement avec un observateur de vitesse (1) , qui présente une première entrée (5) pour les valeurs de vitesse (ωe) et une seconde entrée (6) pour les valeurs d'accélération (ε), dans lequel la seconde entrée ou entrée de valeurs d'accélération (6) est connectée ou peut être connectée à un capteur d'accélération de type Ferraris (7) ou à un autre capteur d'accélération, **caractérisé en ce que** la première entrée ou entrée de valeurs de vitesse est connectée ou peut être connectée à un dispositif (4) pour déterminer la vitesse (ωe) du rotor à aimant permanent, lequel dispositif est équipé d'entrées pour mesurer, prélever et/ou acquérir des valeurs de tension à deux ou plusieurs phases et/ou des valeurs de courant (il, i2, ..., in) du moteur et est aménagé et/ou conçu à cet égard par des techniques de programmation et/ou de commutation pour générer à sa sortie, à l'aide des valeurs de tension et/ou des valeurs de mesure de courant (il, i2, ..., in), les valeurs de vitesse (ωe) pour la première entrée (5) de l'observateur de vitesse (1) et le dispositif de détermination de la vitesse d'entraînement (ωe, ω_{ef}) et/ou de la position (ϕₑ) d' un rotor à aimant permanent d' un moteur électrique linéaire ou rotatif sans balais est aménagé et/ou conçu pour fonctionner sans interruption sur toute la plage de vitesses, y compris à l'arrêt du rotor, avec les composantes fonctionnelles suivantes :
- un module de modélisation de moteur (9) réalisé par des techniques de commutation et/ou de programmation, qui présente :
* des interfaces d'entrée (10, 11, 12 ; id, iq ; ud, uq) pour un courant (il, i2, ..., in) du stator (1) du moteur électrique et/ou d'une tension prédéfinie et/ou pour la vitesse déterminée (ω_{ef}),
* et des interfaces de sortie (13, 14) pour des valeurs de tension (Δu_{d}, Δu_{q}) correspondant à une force contre-électromotrice du rotor influençant le courant statorique (il ; i2),
- une source de signal test ou d'injection (36, 37), qui est couplée aux conducteurs de courant du stator (1), pour appliquer un signal test de fréquence porteuse (ωc) prédéterminée,
- un module de démodulation (32) réalisé par des techniques de commutation et/ou de programmation, qui est couplé côté entrée à des valeurs de courant (i_{d}, i_{q}) pour le courant statorique, qui présente un filtre passe-bande (35) aligné sur la fréquence porteuse de signal test (ωc) et auquel sont acheminées, côté entrée, les valeurs de courant (i_{d}, i_{q}), et dans lequel la sortie du filtre passe-bande (35) est acheminée à une interface de sortie (45) du module de démodulation pour une valeur de courant de démodulation (iq_dem),
- et un module de fusion (6) réalisé par des techniques de commutation et/ou de programmation, qui est couplé côté entrée aux interfaces de sortie (13, 14, 27 ; 45) du module de modélisation et de démodulation (9 ; 32) et qui présente, côté sortie, une interface de sortie (54) pour la vitesse d'entraînement déterminée (ω_{ef}).

8. Aménagement selon la revendication 7, **caractérisé en ce que** l'entrée de valeurs d'accélération (6) de l'observateur de vitesse (1) est réalisée avec un organe proportionnel (8) à des fins de pondération avec un facteur de normalisation (kε).

9. Aménagement selon la revendication 7 ou 8, **caractérisé en ce que** le dispositif de détermination est réalisé avec les composantes fonctionnelles suivantes :
a) un module de modélisation de moteur (9) réalisé par des techniques de commutation et/ou de programmation, qui présente :
aa) des interfaces d'entrée (10, 11, 12) pour des composantes vectorielles longitudinale et transversale du moteur (id, i_{q} ; ud, u_{q}) transformées dans un système de coordonnées d, q relatif au rotor du courant de stator (il, i2, ..., in) et d'une tension prédéfinie, ainsi que pour la vitesse déterminée (ωₑₘ),
ab) et au moins deux interfaces de sortie (13,14) pour des composantes vectorielles (Δu_{d}, Δu_{q}) transformées dans le système de coordonnées d, q d'un écart de tension calculé en interne,
b) un régulateur de suivi (6) réalisé par des techniques de commutation et/ou de programmation pour délivrer la position et/ou la vitesse et qui est connecté :
ba) côté entrée, aux au moins deux interfaces de sortie (13,14) du module de modélisation (9),
bb) et côté sortie, à l'interface d'entrée de vitesse (10) du module de modélisation (9), dans lequel le module de modélisation du moteur (9) présente au moins encore une troisième interface de sortie (27) pour un écart de tension d'inductance (Δu_{L}) et est conçu à cet égard pour évaluer au moyen d'organes proportionnels (A,D) les valeurs d'entrée pour les composantes vectorielles longitudinale et transversale de courant (id, iq) avec des valeurs fixes pour une inductance longitudinale ou transversale (L_{d}, L_{q}) du stator (1) ou du moteur, pour former au moyen d'un organe de sommation d'inductance (26) la différence des valeurs d'entrée évaluées en mode inductif et pour délivrer celle-ci par le biais de la troisième interface de sortie (27), à laquelle le régulateur de suivi (6) est connecté côté entrée pour recevoir la différence et est conçu à cet égard pour traiter la différence dans le but de déterminer la vitesse (ωₑₘ) et délivrer cette dernière à l'interface d'entrée de vitesse (10) du module de modélisation (9).

10. Aménagement selon l'une quelconque des revendications 7 à 9, **caractérisé en ce que** le dispositif de détermination de la vitesse d'entraînement (ωe, ω_{ef}) et/ou de la position (ϕe) d'un rotor à aimant permanent d'un moteur électrique linéaire ou rotatif sans balais est aménagé et/ou conçu pour fonctionner sans interruption sur toute la plage de vitesses, y compris à l'arrêt du rotor, dans lequel :
a) le module de fusion (6) présente un premier régulateur de suivi de modèle (30) couplé aux interfaces de sortie du module de modélisation (13, 14, 27) et un second régulateur de suivi d'injection (31) couplé à l'interface de sortie de courant (45) du module de démodulation (32), qui présentent tous deux respectivement des interfaces de sortie (23 ; 49) au moins pour des valeurs de vitesse de modèle ou d'injection,
b) l'interface de sortie du régulateur de suivi (49) pour les valeurs de vitesse d'injection pour leur pondération est couplée à une sortie d'un organe de sommation (F), qui est doté d'une fonction de transmission,
qui présente une courbe descendante avec un signal d'entrée (ω_{ef}) ou un argument croissant numériquement,
c) l'entrée de l'élément de sommation (F) est connectée à une interface de sortie du module de fusion (6) ou à un point de sommation de fusion (51) pour la vitesse d'entraînement déterminée (ω_{ef}),
d) la sortie (49) influencée ou pondérée par l'organe de sommation (F) pour des valeurs de vitesse d'injection et l'interface de sortie du régulateur de suivi (23) pour les valeurs de vitesse de modèle sont acheminées conjointement avec un organe de combinaison ou le point de sommation de fusion (51),
e) la sortie de l'organe de combinaison ou du point de sommation de fusion (51) est connectée directement ou indirectement à une interface de sortie (54) du module de fusion (6) pour la vitesse d'entraînement déterminée (ω_{ef}).

11. Aménagement selon la revendication 10, **caractérisé en ce que** le module de fusion (6) est réalisé par des techniques de commutation et/ou de programmation avec des interfaces côté entrée (18, 19, 28) pour des valeurs de tension et de courant (Δu_{d}, Δu_{q} Δu_{L}, i_{q}_ₑₘ) , avec un mécanisme régulateur de suivi (30,31) pour déterminer à partir des valeurs de tension et de courant une position (ϕe) et/ou une vitesse (ω_{ef}) d'entraînement électrique d'un moteur électrique, et avec des interfaces de sortie (54) pour la position (ϕe) et/ou la vitesse (ω_{ef}) d'entraînement déterminée (s), dans lequel le mécanisme régulateur de suivi (30,31) comprend :
a) au moins deux régulateurs de suivi de modèle et d'injection (30,31) fonctionnant indépendamment l'un de l'autre, dont l'un, le régulateur de suivi de modèle (30), est affecté aux valeurs de tension (ΔU_{d}, Δu_{q}, Δu_{L}) et l'autre, le régulateur de suivi d'injection (31), est affecté aux valeurs de courant (i_{q}__{dem}), et tous deux sont conçus pour générer à partir des valeurs de tension ou de courant (ΔU_{d}, Δu_{q}, Δu_{L}, i_{q}__{dem}) des valeurs de vitesse (ω_{ef}, ωe).

12. Aménagement selon la revendication 11, **caractérisé en ce que** le module de fusion (6) comprend en outre :
b) un organe de sommation (F) avec une fonction de transmission descendante avec son signal d'entrée (ω_{ef}) croissant numériquement, lequel organe de sommation (F) est connecté, côté entrée, à l'interface de sortie (54) pour la vitesse d'entraînement déterminée (ω_{ef}) et couplé, côté sortie, à la sortie (49) du régulateur de suivi d'injection (31) affecté aux valeurs de courant (i_{q}__{dem}) pour pondérer ses valeurs de vitesse générées (49),
c) un organe de combinaison (51), auquel sont acheminées ensemble la sortie du régulateur de suivi d'injection (49) couplée et/ou pondérée avec l'organe de sommation (F) et la sortie du régulateur de suivi de modèle (30) affectée aux valeurs de tension (ΔU_{d}, ΔU_{q}, ΔU_{L}),
d) et une connexion de la sortie de l'organe de combinaison (51) directement ou indirectement avec l'interface de sortie (54) du module de fusion (6) pour la vitesse d'entraînement déterminée (ω_{ef}).

13. Aménagement selon l'une quelconque des revendications 7 à 12, **caractérisé en ce que** le module de modélisation du moteur (9) comprend ce qui suit :
a) des interfaces d'entrée (11) pour des composantes vectorielles longitudinale et transversale du moteur (i_{d}, i_{q}, u_{d}, u_{q}) transformées dans un système de coordonnées d,q relatif au rotor du courant et d'une tension prédéfinie, ainsi que pour une vitesse du moteur (ω_{ef}) déterminée en externe,
b) et au moins deux interfaces de sortie (13,14) pour des composantes vectorielles longitudinale et transversale (Δu_{d}, Δu_{q}) transformées dans le système de coordonnées d,q d'un écart de tension calculé en interne,
c) et plusieurs organes proportionnels (r,A,D) pour pondérer les composantes vectorielles de courant ( i_{d}, i_{q}) avec une résistance ohmique de stator ou de moteur (r) et une ou plusieurs inductances de stator ou de moteur (L_{d},L_{q}),
d) un organe limiteur (G) qui est connecté, à son entrée, à l'interface d'entrée (10) pour la vitesse de moteur (ω_{ef}) déterminée en externe et qui est combiné, côté sortie, via un élément multiplicateur (B) à la sortie d'un organe proportionnel (A, D), qui pondère la composante vectorielle longitudinale ou transversale du courant (i_{d}, i_{q}) avec l'inductance longitudinale ou transversale (L_{d}, L_{q}).

14. Aménagement selon l'une quelconque des revendications précédentes, **caractérisé en ce que** l'observateur de vitesse (1) présente une sortie pour des valeurs d'estimation de vitesse déterminées (ω), qui est connectée à un régulateur de vitesse (5) du circuit régulateur d'entraînement.
